(19) Europäisches Patentamt
European Patent Office
Office européen des brevets

(11) Publication number: **0 128 298**
**B1**

(12) **EUROPEAN PATENT SPECIFICATION**

(45) Date of publication of patent specification: **04.07.90**

(51) Int. Cl.$^5$: **G 06 F 15/332**

(21) Application number: **84103993.6**

(22) Date of filing: **10.04.84**

(54) **Orthogonal transformer and apparatus operational thereby.**

(30) Priority: **11.04.83 JP 63186/83**
**20.04.83 JP 69474/83**

(43) Date of publication of application:
**19.12.84 Bulletin 84/51**

(45) Publication of the grant of the patent:
**04.07.90 Bulletin 90/27**

(84) Designated Contracting States:
**DE FR GB IT NL**

(56) References cited:
**IBM TECHNICAL DISCLOSURE BULLETIN, vol. 25, no. 11A, April 1983, pages 5561-5570, New York, US; T.C. ANCHETA: "Faster fourier transform without multiplications"**

(73) Proprietor: **NEC CORPORATION**
**33-1, Shiba 5-chome, Minato-ku**
**Tokyo 108 (JP)**

(72) Inventor: **Watari, Masao**
**c/o NEC Corporation 33-1, Shiba 5-chome**
**Minato-ku Tokyo (JP)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 128 298 B1**

## Description

This invention relates to an orthogonal transformer and an apparatus operational thereby.

To extract spectrum information from a voice signal, the Fourier transform is generally employed. However, Fourier transform functions as an orthogonal transformation on a trigonometrical function system, therefore a multiplier is required to perform the transformation, thereby complicating a hardware configuration. On the other hand, the Walsh transform is available as another means for the orthogonal transformation. As an example of applying it to the spectrum analysis of a voice signal, there is presented a report by Hidafumi Ohga et al., "A WALSH—HADAMARD TRANSFORM LSI FOR SPEECH RECOGNITION", IEEE Transactions on Consumer Electronics, Vol. CE-28, No. 3, August 1982, pp. 263 to 270. The Walsh transform is a rough approximation to the Fourier transform, wherein as twiddle factor (called "element of matrix" otherwise when expressed in matrix, the following description employing "twiddle factor") +1 and −1 are specified on the real axis, and thus a multiplication with the twiddle factor can be replaced by an addition and a subtraction to require no multiplier and also to simplify a hardware configuration. The Walsh transform is described in detail in a report, "BIFORE or Hadamard Transform" by NASIR AHMED, IEEE TRANSACTIONS ON AUDIO AND ELECTROACOUSTICS, SEPTEMBER 1971, pp. 225 to 234. However, a trigonometrical function value in the Fourier transform as the twiddle factor is quantized in the Walsh transform to ±1 (trigonometric function value being replaced by ±1), which may result in a coarse quantization and a large quantizing error, and thus an approximation of Fourier spectrum deteriorates.

Now, an object of this invention is to provide an orthogonal transformer high in approximation and simple in hardware configuration.

Another object of this invention is to provide a signal analyzer simple in configuration to use the above orthogonal transformer.

These objects are achieved by the features of independent claims.

According to this invention, furthermore, a cepstrum information, for example, will be obtainable with a simple hardware through analyzing a signal by the above-mentioned orthogonal transformer.

Further objects and features of this invention will be apparent from the following description with reference to the accompanying drawings.

Fig. 1 is a diagram showing an arithmetic operation flow by an orthogonal transformer according to this invention.

Figs. 2A and 2B are diagrams illustrating a twiddle factor used in the orthogonal transformer according to this invention.

Fig. 3 is a basic block diagram of the orthogonal transformer according to this invention.

Fig. 4 is a detailed block diagram representing one example of an orthogonal transform unit in Fig. 3.

Fig. 5 and Fig. 6 are block diagram representing one example of operators 221 and 222 in Fig. 4.

Fig. 7 is a timing chart of the unit shown in Fig. 4.

Fig. 8 is a drawing showing a relation between a signal k and inputs and operation functions of the operators 221 and 222 in Fig. 4.

Fig. 9 is a diagram showing a timing relation between signal i, j, k supplied from a control unit 30 and R and S in Fig. 4.

Fig. 10 is a detailed block diagram representing another example of the orthogonal transform unit of Fig. 3.

Fig. 11 is a drawing showing a relation between the signal k and the inputs and operation functions of the operators 221 and 222 in Fig. 10.

Fig. 12 is a detailed block diagram representing a third example of the orthogonal transform unit of Fig. 3.

Fig. 13 is a timing chart of the unit shown in Fig. 12.

Fig. 14 is a drawing showing a relation between inputs and operation functions of operators 251 and 252.

Fig. 15 is a detailed block diagram representing a fourth example of the orthogonal transform unit of Fig. 3.

Fig. 16 is a drawing showing a relation between inputs and operation functions of the operators 251 and 252 in Fig. 15.

Fig. 17 is a block diagram of a cepstral analyzer for which the orthogonal transformer of this invention is applied.

Fig. 18 is a diagram illustrating a mapping function in Fig. 17.

Fig. 19 is a timing chart of the unit shown in Fig. 17.

Fig. 20 is a block diagram representing another configuration of the orthogonal transform unit in Fig. 17.

Fig. 21 is a timing chart of the unit shown in Fig. 20.

In order to eliminate the approximation deterioration caused by Walsh transform, the present invention features in employing values of 1 and $r/2^l$ (l being natural number including 0, and r being natural number including 0 determined for each l and $r \leqq 2^l$) as a real part and an imaginary part of the twiddle factor. Where the magnitude of the real part and the imaginary part is given at ±1 and 0, only addition and subtraction are sufficient for Walsh transform, and in the case of $r/2^1$, just adding a shifter makes it possible to perform the orthogonal transform without any multiplier.

Now, a relation between the fast Fourier transform (FFT) and the fast Walsh transform (FWT) will be taken up for description. A method for representing FWT in matrix is given in a report by Nishitani "CONSIDERATION ON FOURIER TRANSFORM AND WALSH TRANSFORM" Trans. IECE in Japan '76/12 Vol. 59-A No. 12, pp. 1,134 to 1,135. Let it be assumed that a column vector arranging an input time series in the inverse binary order according to the description given in the above report is X, a transform matrix is A, and a Fourier spectral vector is F. The inverse binary order then refers to an order of the number obtained by inverting the digit of a natural number represented in binary. Where an input $X = (x_0, x_1, x_2, x_3, x_4, x_5, x_6, x_7)$ is arranged in the inverse binary order, for example, $X = (x_0, X_4, x_2, x_6, x_1, x_5, x_3, x_7)$. FWT can be represented as a n-time product of matrixes as:

$$\begin{aligned} F &= A \cdot X \\ &= P_n \cdot P_{n-1} \cdot \ldots P_i \ldots P_1 \cdot X \end{aligned} \tag{1}$$

Here, each $P_i$ is determined according to Eqs. (2), (3), (4), (5).

$$P_i = B_i \otimes I_{n-1} \tag{2}$$

$$B_i = \begin{pmatrix} I_{i-1} & D_{i-1} \\ \\ I_{i-1} & -D_{i-1} \end{pmatrix} \tag{3}$$

$$D_i = \text{diag}\ \underbrace{(1,\ a_i,\ a_i^{\,2},\ \ldots\ldots,\ a_i^{\,2^{i-1}})}_{2^i \text{ pieces}} \tag{4}$$

$$a_i = \exp(-j\pi / 2^i) \tag{5}$$

where $\otimes$ represents a Kronecker's product, $I_i$ represents a unit matrix of $2^i$ line $2^i$ column, and diag ( ) represents a diagonal matrix with those in parentheses as a diagonal element.

A flow of the arithmetic operation in Eq. (1) is shown in Fig. 1, and i represents the i-th stage of butterfly operation. Then, $p_1 \cdot X$ represents the butterfly operation at the first stage, $P_2 \cdot ({}_2 \cdot X)$ represents the butterfly operation at the second stage, and similarly $P_i \cdot (P_{i-1} \cdot \ldots\ldots P_1 \cdot X)$ represents the butterfly operation at the i-th stage.

In case n = 3, $P_1$, $P_2$, $P_3$ will be expressed by

$$P_1 = \begin{pmatrix} 1 & 1 & & & & & & \\ 1 & -1 & & & & & & \\ & & 1 & 1 & & & & \\ & & 1 & -1 & & & & \\ & & & & 1 & 1 & & \\ & & & & 1 & -1 & & \\ & & & & & & 1 & 1 \\ & & & & & & 1 & -1 \end{pmatrix}$$

$$P_2 = \left[\begin{array}{cc:cc:cc:cc} 1 & & 1 & & & & & \\ & 1 & & a^2 & & & & \\ \hdashline 1 & & -1 & & & & & \\ & 1 & & -a^2 & & & & \\ \hdashline & & & & 1 & & 1 & \\ & & & & & 1 & & a^2 \\ \hdashline & & & & 1 & & -1 & \\ & & & & & 1 & & -a^2 \end{array}\right]$$

$$P_3 = \left[\begin{array}{cccc:cccc} 1 & & & & 1 & & & \\ & 1 & & & & a & & \\ & & 1 & & & & a^2 & \\ & & & 1 & & & & a^3 \\ \hdashline 1 & & & & -1 & & & \\ & 1 & & & & -a & & \\ & & 1 & & & & -a^2 & \\ & & & 1 & & & & -a^3 \end{array}\right]$$

where blank indicates zero, and

$$a = \exp\left(-\frac{\pi}{4} j\right).$$

The number of element which is not zero comes in two in each line, representing the butterfly operation.

Similarly, let it be assumed that a column vector arranging an input time series in the inverse bindary order is X, a transform matrix is C, and a column vector of Walsh spectrum is W, then FWT can be represented in an n-time product of matrixes as:

$$\begin{aligned} W &= C \cdot X \\ &= G_n \cdot G_{n-1} \cdot \ldots \cdot G_1 \cdot X \end{aligned} \quad (6)$$

where each $G_i$ is determined according to Eqs. (7), (8), (9).

$$G_i = E_i \otimes I_{n-i} \quad (7)$$

$$Ei = \left|\begin{array}{c:c} I_{i-1} & L_{i-1} \\ \hdashline I_{i-1} & -L_{i-1} \end{array}\right| \quad (8)$$

$$L_i = \text{diag}\,(\underbrace{1, 1, \ldots\ldots 1,}_{2^{i-1}\ \text{pieces}}\ \underbrace{-1, -1, \ldots\ldots, -1}_{2^{i-1}\ \text{pieces}}) \quad (9)$$

In case $n = 3$, Walsh spectrum $W = (W_0, W_1, W_2, W_3, W_4, W_5, W_6, W_7)$. Operations $G_1$, $G_2$, $G_3$ are expressed as follows:

$$G_1 = P_1$$

$$G_2 = \left[\begin{array}{cc|cc|cc|cc} 1 & & 1 & & & & & \\ & 1 & & -1 & & & & \\ \hline 1 & & -1 & & & & & \\ & 1 & & 1 & & & & \\ & & & & 1 & & 1 & \\ & & & & & 1 & & -1 \\ \hline & & & & 1 & & -1 & \\ & & & & & 1 & & 1 \end{array}\right]$$

$$G_3 = \left[\begin{array}{cccc|cccc} 1 & & & & 1 & & & \\ & 1 & & & & 1 & & \\ & & 1 & & & & -1 & \\ & & & 1 & & & & -1 \\ \hline 1 & & & & -1 & & & \\ & 1 & & & & -1 & & \\ & & 1 & & & & 1 & \\ & & & 1 & & & & 1 \end{array}\right]$$

As described above, FWT is conceivable that a twiddle factor $a_l^k$ of $D_l$ in FFT which is equal to exp $(-j\theta)$ is replaced as:

$$a_l^k \rightarrow 1 \text{ when } 0 \le \theta < \frac{\pi}{2},$$

$$a_l^k \rightarrow 1 \text{ when } \frac{\pi}{2} \le \theta < \pi.$$

Thus, in the Walsh transform trigonometrical function value is quantized to $\pm 1$ as the twiddle factor in the Fourier transform, however, since the quantization is coarse as described hereinabove, high precision transform is not obtainable.

Now, therefore, in the present invention, as the real part and the imaginary part of the twiddle factor $\pm 1$ and $\pm r/2^l$ are permitted. In other words, a so-called multiple valued twiddle factor is permitted. A relation of the twiddle factors in the Fourier transform (FT), the Walsh transform (WT) and a transform according to this invention (hereinafter called multiple valued Walsh transform MWT) is shown in Fig. 2. The twiddle factor in FT takes a value on unit circle, the twiddle factor in WT takes values $+1$ and $-1$ on a real axis, on the other hand, the twiddle factor in MWT takes $\pm 1$ and $\pm r/2^l$ on the real and imaginary axes. Fig. 2A represents an example of an 8 valued twiddle factor of MWT, and Fig. 2B represents an example of 16 twiddle factors.

In an 8 valued fast MWT (abbreviated as FMWT) according to this invention Eq. (4) of the procedures (1) to (5) in FFT is replaced by the following Eq. (10). An arithmetic operation of FMWT is expressed as follows:

$$F = P_n \cdot P_{n-1} \cdot \;\ldots\; \cdot P_1 \cdot X \tag{10}$$

$$P_i = B_i \otimes I_{n-1} \tag{11}$$

$$B_i = \begin{bmatrix} I_{i-1} & D_{i-1} \\ I_{i-1} & -D_{i-1} \end{bmatrix} \tag{12}$$

$$D_i = \text{diag.}\ (1, [a_i], [a_i^{2}], \ldots, [a_i^{2^i-1}]) \qquad (13)$$

where, assuming $a_i = \exp(j\pi/2^i)$, $a_i^k = e^{j\theta}$,

$$[e^{j\theta}] = 1, \quad \text{when } 0 \leq \theta < \frac{\pi}{4},$$

$$= 1 + j, \quad \text{when } \frac{\pi}{4} \leq \theta < \frac{\pi}{2}$$

$$= j, \quad \text{when } \frac{\pi}{2} \leq \theta < \frac{3\pi}{4},$$

$$= -1 + j, \quad \text{when } \frac{3}{4}\pi \leq \theta < \pi.$$

The twiddle factors in the actual MWT are given as (1, 1+j, j, −1+j, −1, −1−j, −j, 1−j), however, they can be substituted by four-piece twiddle factors through inversion as shown above.

Similarly, the twiddle factors in the 16 valued are given as ($1, 1+\frac{1}{2}j, 1+j, \frac{1}{2}+j, j, -\frac{1}{2}+j, -1+j, -1+\frac{1}{2}j, -1, -1-\frac{1}{2}j, -1-j, -\frac{1}{2}-j, -j, \frac{1}{2}-j, 1-j, 1-\frac{1}{2}j$), however, $D_i$ uses 8 pieces as expressed in Eq. (14).

$$D_i = \text{diag.}\ (1, [a_i], [a_i^{2}], \ldots, [a_i^{2^i-1}]) \qquad (14)$$

$$\text{where } [e^{j\theta}] = 1, \quad \text{when } 0 \leq \theta < \frac{\pi}{8}$$

$$= 1 + \frac{1}{2}j, \quad \text{when } \frac{\pi}{8} \leq \theta < \frac{\pi}{4},$$

$$= 1 + j, \quad \text{when } \frac{\pi}{4} \leq \theta < \frac{3\pi}{8}$$

$$= \frac{1}{2} + j, \quad \text{when } \frac{3\pi}{8} \leq \theta < \frac{\pi}{2}$$

$$= j, \quad \text{when } \frac{\pi}{2} \leq \theta < \frac{5\pi}{8},$$

$$= -\frac{1}{2} + j, \quad \text{when } \frac{5\pi}{8} \leq \theta < \frac{3\pi}{4}$$

$$= -1 + j, \quad \text{when } \frac{3\pi}{4} \leq \theta < \frac{7\pi}{8}$$

$$= -1 + \frac{1}{2}j, \quad \text{when } \frac{7\pi}{8} \leq \theta < \pi.$$

Next, a configuration of the apparatus according to this invention will be described with reference to the accompanying drawings.

As illustrated in Fig. 3, the orthogonal transformer according to this invention comprises basically a buffer memory 10 for storing an input time series complex number signal X, an orthogonal transform unit (MWT) 20 for carrying out an arithmetic operation of the multiple valued Walsh transform (MWT) proposed above, and a control unit 30 for outputting control signals for controlling the buffer memory 10 and the orthogonal transform unit 20.

One example of the orthogonal transform unit 20 for carrying out the 8 valued MWT is described with reference to Fig. 4. Fig. 4 shows a configuration for carrying out arithmetic operations shown in Fig. 1 and Eqs. (10) to (13), wherein the orthogonal transform unit 20 performs an arithmetic operation by each butterfly circuit of Fig. 1.

A general type of butterfly circuit in FFT is that for obtaining two outputs $y_i$, $y_j$ from two inputs $x_i$, $x_j$ through Eq. (15), therefore a multiplier for multiplication by a twiddle factor $a_k$ will be required.

$$\begin{cases} y_i = x_i + x_j \cdot a_k \\ y_j = x_i - x_j \cdot a_k \end{cases} \qquad (15)$$

Since $a_k = \pm 1$ in this invention, the transform unit, can be constituted of adder and subtracter only. Then, even in case $a_k = r/2^l$, since a half value is obtainable through shifting a data by one bit as is well known hitherto, a multiplier is also not required from using shifters combined properly each other.

Reverting now to Fig. 3, time series complex number data $x_0, x_1, \ldots, x_{2n-1}$ are inputted to the buffer memory 10, rearranged in the inverse bindary order and then stored temporarily in response to a signal IN from the control unit 30. In the case of $2^4 = 16$ pieces of time series data, for example, they are stored temporarily as data $x_0{}^1, x_1{}^1, x_2{}^1, \ldots, x_{15}{}^1$ in the order of $x_0$, $x_8$, $x_4$, $x_{12}$, $x_2$, $x_{10}$, $x_6$, $x_{14}$, $x_1$, $x_9$, $x_5$, $x_{13}$, $x_3$, $x_{11}$, $x_7$, $x_{15}$. The orthogonal transform or MWT according to this invention is a process for carrying out $2^{n-1}$ butterfly arithmetic operations, as shown in Fig. 1, at each stage of the first stage to the n-th stage. Consequently, signals m(1, 2, . . . , m, . . . , n) specifying each stage and signals $l(0, 1, \ldots, 2^{n-m}-1)$, $k'(0, 1, \ldots, 2^{m-1}-1)$ specifying a predetermined butterfly operation are generated in the control unit 30 at a timing shown in Fig. 7, and signals i, j, k which are determined by Eqs. (16) to (18) are supplied to the buffer memory 10 and the MWT unit 20 from the control unit 30. Here, the signals i and j specify two inputs $x_i$, $x_j$ of the butterfly operations to be carried out hence-forward. The signal k specifies a kind of the butterfly operation or determines the twiddle factor.

$$i = 2^m \cdot l + k' \qquad (16)$$

$$j = i + 2^{m-1} \qquad (17)$$

$$k = 2^{n-m} \cdot k' \qquad (18)$$

Two outputs $x_i^{m+1}$, $x_j^{m+1}$ of the butterfly operation circuit specified by the signals l and k' at the m-th stage are expressed as:

$$x_i^{m+1} = x_i^m + x_j^m \cdot a_k \qquad (19)$$

$$x_j^{m+1} = x_i^m - x_j^m \cdot a_k \qquad (20)$$

where $x_i^m$, $x_j^m$ are the two inputs of the butterfly operation circuit. The operation is obtainable through the following procedure:

Referring to Fig. 4, the signals $x_i^m$, $x_j^m$ are read out of the buffer memory 10 according to the signals i, j from the control unit 30, and the real parts $x_{iR}$, $x_{jR}$ and the imaginary parts $x_{iI}$, $x_{jI}$ are stored in registers 201, 203 and 202, 204 respectively in response to a signal R from the control unit 30. Then the butterfly operation specified by a signal k is carried out consecutively in the orthogonal transform unit 20. An addition or a subtraction is performed in operators 221 and 222 according to the signal k. The operator 221 further performs a inversion after addition operation in accordance with the signal k. As shown in Figs. 5 and 6, for example, the operator 221 comprises an adder 2210, a subtracter 2211, an inverter 2212, and a switch 2213, while the operator 222 comprises an adder 2220, a subtracter 2221, and a switch 2222. The switches 2213 and 2222 select the predetermined inputs according to the signal k.

Predetermined signals are selected by a switch 211 operating in accordance with the signal k out of output signals of the registers 203, 204 and "0" signals as inputs $A_R$, $B_R$ and $A_I$, $B_I$ of the operators 221 and 222, respectively. A relation of such selective operation of the switch 211, function of the operators 221, 222, and the signal k is shown in Fig. 8. Namely, inputs of the operators 221, 222 and functions (kind of arithmetic operation, namely addition, subtraction, addition and then inversion) of the operators 221, 222 are selected by the switch 211 controlled according to the signal k. Thus, the real part and the imaginary part of $x_j^m \cdot a_k$ are obtained as outputs $Z_R$ and $Z_I$ of the operators 221 and 222, respectively. Specifically, with $(Z_R + jZ_I) = (x_{jR} + jX_{jI}) \cdot a_k$, four kinds of additions and subtractions are executed as:

$$a_k = 0 \text{ when } k = 0 \text{ or } 1,$$

$$\begin{cases} Z_R = x_{jR} \\ Z_I = x_{jI} \end{cases} \quad (21)$$

$$a_k = 1 + j \text{ when } k = 2 \text{ or } 3,$$

$$\begin{cases} Z_R = x_{jR} - x_{jI} \\ Z_I = x_{jR} + x_{jI} \end{cases} \quad (22)$$

$$a_k = j \text{ when } k = 4 \text{ or } 5,$$

$$\begin{cases} Z_R = -x_{jI} \\ Z_I = x_{jR} \end{cases} \quad (23)$$

$$a_k = -1 + j \text{ when } k = 6 \text{ or } 7,$$

$$\begin{cases} Z_R = -x_{jR} - x_{jI} \\ Z_I = x_{jR} - x_{jI} \end{cases} \quad (24)$$

Then consecutively, addition and subtraction of Eqs. (19), (20) are carried out by adders 231, 232 and subtracters 233, 234 for the real part and the imaginary part divisionally. Results $x_i^{m+1}$ and $x_j^{m+1}$ thus obtained are written in the portion of the buffer memory 10 where $x_i^m$ and $x_j^m$ are stored at a timing of signal S from the control unit 30. Fig. 9 shows a relation of the signals i, j, k, the signal R for writing data from the buffer memory 10 into the registers 201 to 204, and the signals S for writing outputs of the operators (adders and subtractors) 231 to 234 into the buffer memory 10. Fig. 9 thus represents a state wherein a result obtained through carrying out the butterfly operation specified by the signal k at every outputs of the signal R according to a data signal specified by the signals i, j is written into the buffer memory 10 at a timing of signal S.

Next, a sequence in which each butterfly operation is executed will be described concretely with reference to the case n = 4. With m = 1, the butterfly operation at the first stage is executed with l = 0, 1, . . . , 7, and k′ = 0. In other words, i and j take values (0, 1), (2, 3), . . ., (14, 15) in sequence, and k is 0. Then, l changes as 0, 1, . . . , 3 at the second stage consecutively, and k′ takes values of 0 and 1 for each l. That is, values of i, j, k are (0, 2, 0), (1, 3, 4), (4, 6, 0), (5, 7, 4), . . . , (12, 14, 0), (13, 15, 4). At the fourth stage that is final, l is 0 and k′ changes as 0, 1, . . . , 7. Namely, values of k, j, k are (0, 8, 0), (1, 9, 1) . . . , (7, 15, 7).

Generally at the m-th stage, l changes as 0, 1, . . . , $2^{n-m}-1$, and k′ changes as 0, 1, . . . , $2^{m-1}$ for each l. In other words, values of i, j, k take those $(0, 2^{m-1}, 0)$, $(1, 2^{m-1}+1, 2^{n-m})$, . . . , $(2^{m-1}-1, 2^m-1, 2^{n-1}-2^{n-m})$, . . . , $(2^m, 2^m+2^{m-1}, 0)$, $(2^m+1, 2^m+2^{m-1}+1, 2^{n-m})$, . . . , $2^m+2^{m-1}-1, 2^{2m}-1, 2^{n-1}-2^{n-m})$, . . . , $(2^n-2^m, 2^n-2^{m-1}, 0)$, $(2^n-2^m+1, 2^n-2^{m-1}+1, 2^{n-m})$, . . . , $(2^n-2^{m-1}-1, 2^n-1, 2^{n-1}-2^{n-m})$.

At the time point when the butterfly operation at the final stage has been executed, the multiple valued Walsh transformed values $WM_0$, $WM_1$ . . . , $WM_{2n-1}$ are stored in the buffer memory 10, and a result is outputted according to a read signal OUT shown in Fig. 7.

Fig. 10 represents a configuration of 16 valued Walsh transform unit given in another embodiment of this invention. What is different from the configuration of Fig. 4 is that a value of the twiddle factor in the butterfly operation comes in eight kinds, shifters 241, 242 are provided for obtaining a half-value data of the data from the registers 203, 204, and a switch 212 is provided for selective operation.

A complex number multiplication for $x_j^m \cdot a_k$ is obtained by the orthogonal transform unit 21 through the following 8-way operation. As in the case of the above embodiment, $a_k$ is determined by k which is obtained through Eq. (18).

$$\text{Where } (Z_R + jZ_I) = (x_{jR} + jx_{jI}) \cdot a_k:$$

$$a_k = 1 \text{ when } k = 0,$$

$$\begin{cases} Z_R = x_{jR} \\ Z_I = x_{jI} \end{cases} \tag{25}$$

$a_k = 1 + \frac{1}{2}j$ when $k = 1$,

$$\begin{cases} Z_R = x_{jR} - \frac{1}{2}x_{jI} \\ Z_I = \frac{1}{2}x_{jR} + x_{jI} \end{cases} \tag{26}$$

$a_k = 1 + j$ when $k = 2$,

$$\begin{cases} Z_R = x_{jR} - x_{jI} \\ Z_I = x_{jR} + x_{jI} \end{cases} \tag{27}$$

$a_k = \frac{1}{2} + j$ when $k = 3$,

$$\begin{cases} Z_R = \frac{1}{2}x_{jR} - x_{jI} \\ Z_I = x_{jR} + \frac{1}{2}x_{jI} \end{cases} \tag{28}$$

$a_k = j$ when $k = 4$,

$$\begin{cases} Z_R = -x_{jI} \\ Z_I = x_{jR} \end{cases} \tag{29}$$

$a_k = -\frac{1}{2} + j$ when $k = 5$,

$$\begin{cases} Z_R = -\frac{1}{2}x_{jR} - x_{JI} \\ Z_I = x_{jR} - \frac{1}{2}x_{jI} \end{cases} \tag{30}$$

$a_k = -1 + j$ when $k = 6$,

$$\begin{cases} Z_R = -x_{jR} - x_{jI} \\ Z_I = x_{jR} - x_{jI} \end{cases} \tag{31}$$

$a_k = -1 + \frac{1}{2}j$ when $k = 7$,

$$\begin{cases} Z_R = -x_{jR} - \frac{1}{2}x_{jI} \\ Z_I = \frac{1}{2}x_{jR} - x_{jI} \end{cases} \tag{32}$$

The above operations are obtained through the operation of the shifters 241 and 242, the switch 212, the operators 221 and 222 under the control of the control unit 30. Namely, the shifters 241 and 242 obtain $\frac{1}{2}x_{jR}$ and $\frac{1}{2}x_{jI}$ by arithmetic shifting one bit, the switch 212 selects predetermined data out of $x_{jR}$, $x_{jI}$, $\frac{1}{2}x_{jR}$, $\frac{1}{2}x_{jI}$ and 0 as inputs of the operators 221 and 222, the operator 222 carries out addition or subtraction, and the operator 221 carries out addition, subtraction or inversion after addition. Through these operations of the above-mentioned Eqs. (25) to (32) are executed. A relation of the signal k, inputs and kind of functions of the operators 221, 222 are shown in Fig. 11.

As in the case of Fig. 4, the addition and subtraction are carried out consecutively by the adders 231, 232 and subtracters 233, 234, and obtained results are written in to buffer memory 10. Results obtained after processing at the n-th stage that is final are spectrums $WM_1$ to $WM_{16}$ subjected to the 16 valued Walsh transform.

Fig. 12 is a block diagram of a third embodiment of this invention, which is an 8 valued Walsh transform unit for obtaining a matrix A of Eq. (1) through direct multiplications and additions according to a method a similar to DFT (Discrete Fourier Transform). Assuming now an element k line i column of the matrix A of Eq. (1) is $a_{ki}$, and $X = (x_0, x_1, \ldots, x_i, \ldots, x_{2^n-1})$, a multiple valued Walsh spectrum $WM_k$ is obtainable through getting a product sum of $a_{ki}$ and input time series $x_i$ as:

$$WM_k = \sum_{i=0}^{2n-1} a_{ki} \cdot x_i \tag{33}$$

Here, since $A = P_1 \cdot P_2 \ldots \cdot P_n$, $a_{ki}$ is one of 8 pieces (1, 1+j, j, −1+j, −1, −1−j, −j, 1−j) shown in Fig. 2A in the case of the 8 valued Walsh transform. To describe concretely , $a_{ki}$ is determined by Eq. (34).

$$a_{ki} = a_{[k \cdot i]} \tag{34}$$

where $[k \cdot i]$ is a remainder from dividing $k \cdot i$ by 8.
That is,

$$a_0 = 1,\ a_1 = 1+j,\ a_2 = j,\ a_3 = -1+j,\ a4 = -1,\ a_5 = -1-j,\ a_6 = -j,\ a_7 = 1-j.$$

Consequently, the operation of the product in Eq. (33) can be performed by adder and subtracter.

At the beginning a signal $Cl_1$ from a control unit 31 clears accumulators 261 and 262 according to a time chart shown in Fig. 13. Then consecutively, an input time series data $x_i$ is read in sequence out of a buffer memory 11 according to a signal i changing from 0 to $2^n-1$. Here, an orthogonal transformation multiple valued Walsh transform unit 22 comprises a real part accumulator 261 and an imaginary part accumulator 262, a real part operator 251 and an imaginary part operator 252, and a switch 213 for inputting the data $x_i$ or zero to the real part operator 251 or the imaginary part operator 252. The orthogonal transformer unit 22 operates in the following eight ways according to a signal $k_i$ from the control unit 31. As shown in Fig. 14, a kind of operation (addition or subtraction) of the operators 251, 252 having a configuration shown in Fig. 6 is selected in accordance with the signal $k_i$. If contents of the real part accumulator 261 and the imaginary part accumulator 262 be $ACC_R$ and $ACC_I$ respectively, then

$$\begin{cases} ACC_R + x_i \longrightarrow ACC_R \\ ACC_I + 0 \longrightarrow ACC_I \end{cases} \quad \text{when } a_{ki} = 1,$$

In other words, results of $ACC_R + x_i$ and $ACC_I + 0$ are written into the accumulators 261 and 262, respectively. The switch 213 and the operators 251 and 252 are controlled to carry out the following arithmetic operations:

$$\begin{cases} ACC_R + x_i \longrightarrow ACC_R \\ ACC_I + x_i \longrightarrow ACC_I \end{cases} \quad \text{when } a_{ki} = 1 + j$$

$$\begin{cases} ACC_R + 0 \longrightarrow ACC_R \\ ACC_I + x_i \longrightarrow ACC_I \end{cases} \quad \text{when } a_{ki} = j$$

$$\begin{cases} ACC_R - x_i \longrightarrow ACC_R \\ ACC_I + x_i \longrightarrow ACC_I \end{cases} \quad \text{when } a_{ki} = -1 + j$$

$$\begin{cases} ACC_R - x_i \longrightarrow ACC_R \\ ACC_I + 0 \longrightarrow ACC_I \end{cases} \quad \text{when } a_{ki} = -1$$

$$\begin{cases} ACC_R - x_i \longrightarrow ACC_R \\ ACC_I - x_i \longrightarrow ACC_I \end{cases} \quad \text{when } a_{ki} = -1 - j$$

$$\begin{cases} ACC_R + 0 \longrightarrow ACC_R \\ ACC_I - x_i \longrightarrow ACC_I \end{cases} \quad \text{when } a_{ki} = -j$$

$$\begin{cases} ACC_R + x_i \longrightarrow ACC_R \\ ACC_I - x_i \longrightarrow ACC_I \end{cases} \quad \text{when } a_{ki} = 1 - j$$

When the signal i becomes $2^n-1$, a real part $WM_{kR}$ and an imaginary part $WM_{kI}$ of $WM_k$ which is a k-degree term of the multiple valued Walsh spectrum are obtained in the accumulators 261 and 262, respectively. The above example refers to a case where the input signal has only a real component, however, it is apparent that the above-mentioned other example will be applicable to the case of complex number input signal.

Next, the fourth embodiment relates to a 16 valued Walsh transformer for obtaining directly a product sum of the $a_{ki}$ and the input time series $x_i$ according to Eq. (33). $a_{ki}$ of Eq. (33) is one of sixteen pieces (1, $1+\frac{1}{2}j$, $1+j$, $\frac{1}{2}+j$, j, $-\frac{1}{2}+j$, $-1+J$, $-1+\frac{1}{2}j$, $-1$, $-1-\frac{1}{2}j$, $-1-j$, $-\frac{1}{2}-j$, $-j$, $\frac{1}{2}-j$, $1-j$, $1-\frac{1}{2}j$) shown in Fig. 2B in the case of the 16 valued Walsh transform, and the product of Eq. (33) is obtainable by shifters and operators (adder and subtracter). $a_{ki}$ is determined according to Eq. (35) as in the case of Eq. (34).

$$a_{ki} = a_{[k \cdot i]} \qquad (35)$$

where [k·i] is a remainder from dividing k·i by 16.

$$a_0=1,\ a_1=1+\frac{1}{2}j,\ a_3=1+j,\ a_4=\frac{1}{2}+j,\ a_5=j,\ a_6=-\frac{1}{2}+j,$$
$$a_7=-1+j,\ a_8=-1+\frac{1}{2}j,\ a_8=-1,\ a_9=-1-\frac{1}{2}j,\ a_{10}=-1-j,$$
$$a_{11}=-\frac{1}{2}-j,\ a_{12}=-j,\ a_{13}=\frac{1}{2}-j,\ a_{14}=1-j,\ a_{15}=1-\frac{1}{2}j.$$

A multiple valued Walsh transform unit 23 in this embodiment has a shifter 243 in front of a switch 214 as shown in Fig. 15. The unit 23 operates in the following sixteen ways according to signal $k_i$, $CI_1$ from the control the control unit 31 as in the case of the third embodiment. That is, a kind of arithmetic function (addition or subtraction) of the operators 251, 252 is selected according to the signal $k_i$ as shown in Fig. 16.

The switch 214 and the shifter 243 and the operators 251, 252 are controlled for arithmetic operations:

$$\begin{cases} ACC_R + x_i \longrightarrow ACC_R \\ ACC_I + 0 \longrightarrow ACC_I \end{cases} \quad \text{when } a_{ki} = 1$$

$$\begin{cases} ACC_R + x_i \rightarrow ACC_R \\ ACC_I + \frac{1}{2}x_i \rightarrow ACC_I \end{cases} \quad \text{when } a_{ki} = 1 + \frac{1}{2}j$$

$$\begin{cases} ACC_R + x_i \rightarrow ACC_R \\ ACC_I + x_i \rightarrow ACC_I \end{cases} \quad \text{when } a_{ki} = 1+j$$

$$\begin{cases} ACC_R + \frac{1}{2}x_i \rightarrow ACC_R \\ ACC_I + x_i \rightarrow ACC_I \end{cases} \quad \text{when } a_{ki} = \frac{1}{2} + j$$

$$\begin{cases} ACC_R + 0 \rightarrow ACC_R \\ ACC_I + x_i \rightarrow ACC_I \end{cases} \quad \text{when } a_{ki} = j$$

$$\begin{cases} ACC_R - \frac{1}{2}x_i \rightarrow ACC_R \\ ACC_I + x_i \rightarrow ACC_I \end{cases} \quad \text{when } a_{ki} = -\frac{1}{2} + j$$

$$\begin{cases} ACC_R - x_i \rightarrow ACC_R \\ ACC_I + x_i \rightarrow ACC_I \end{cases} \quad \text{when } a_{ki} = -1 + j$$

$$\begin{cases} ACC_R - x_i \rightarrow ACC_R \\ ACC_I + \frac{1}{2}x_i \rightarrow ACC_I \end{cases} \quad \text{when } a_{ki} = -1 + \frac{1}{2}j$$

$$\begin{cases} ACC_R - x_i \rightarrow ACC_R \\ ACC_I + 0 \rightarrow ACC_I \end{cases} \quad \text{when } a_{ki} = -1$$

$$\begin{cases} ACC_R - x_i \rightarrow ACC_R \\ ACC_I - \frac{1}{2}x_i \rightarrow ACC_I \end{cases} \quad \text{when } a_{ki} = -1 - \frac{1}{2}j$$

$$\begin{cases} ACC_R - x_i \rightarrow ACC_R \\ ACC_I - x_i \rightarrow ACC_I \end{cases} \quad \text{when } a_{ki} = -1 - j$$

$$\begin{cases} ACC_R - \frac{1}{2}x_i \rightarrow ACC_R \\ ACC_I - x_i \rightarrow ACC_I \end{cases} \quad \text{when } a_{ki} = -\frac{1}{2} - j$$

$$\begin{cases} ACC_R + 0 \rightarrow ACC_R \\ ACC_I - x_i \rightarrow ACC_I \end{cases} \quad \text{when } a_{ki} = -j$$

$$\begin{cases} ACC_R + \frac{1}{2}x_i \rightarrow ACC_R \\ ACC_I - x_i \rightarrow ACC_I \end{cases} \quad \text{when } a_{ki} = \frac{1}{2} - j$$

$$\begin{cases} ACC_R + x_i \rightarrow ACC_R \\ ACC_I - x_i \rightarrow ACC_I \end{cases} \quad \text{when } a_{ki} = 1-j$$

$$\begin{cases} ACC_R + x_i \rightarrow ACC_R \\ ACC_I - \frac{1}{2}x_i \rightarrow ACC_I \end{cases} \quad \text{when } a_{ki} = 1 - \frac{1}{2}j$$

The shifter 243 outputs $\frac{1}{2}x_i$. When the signal i becomes $2^n-1$, a real part $WM_{kR}$ and an imaginary part $WM_{kI}$ of the multiple Walsh spectrum $WM_k$ are obtained in the accumulators 261 and 262, respectively.

The invention has been described as above with reference to the embodiments, however, the description is not necessarily to limit a scope of this invention. Particularly in the embodiments of this invention, the method comprises, with FFT working as algorithm, rearranging the input time series in an inverse binary order, multiplying from $P_1$ to $P_n$, thus obtaining a result in regular order, however, it is apparent that a method for obtaining the result in inverse binary order through multiplying the input time series straight in that order from $P_n^T$ to $P_1^T$ can be employed. The 8 valued and 16 valued Walsh transforms have been taken up for description as above, however, a multiple valued Walsh twiddle factor on a unit square around an origin shown in Figs. 2A and 2B on 32-value, 64-value, . . . . . . as extending 8 values and 16 values is also conceivable, and these can be obtained apparently by an adder, a subtracter and a shifter.

Now, an application of the above-described orthogonal transformer to a signal analysis apparatus will be described.

The orthogonal transformer can be used instead of Fourier transform employed generally, however, the embodiment refers to an analyzer for obtaining cepstral information which is a feature parameter of voice signal.

As is known generally, a voice signal G(t) is expressed in convolution of an impulse response R(t) of a vocal tract and a sound source waveform S(t) as Eq. 36.

$$G(t) = R(t) * S(t) \quad (36)$$

(* denoting a convoluting operation) From subjecting Eq. (36) to the Fourier transform:

$$G_f(\omega) = R_f(\omega) \times S_f(\omega) \quad (37$$

The sound source characteristic $S_f(\omega)$ is an envelope of a periodic linear spectrum, and the vocal tract characteristic $R_f(\omega)$ is an envelope of the sound spectrum $G_f(\omega)$.

From subjecting Eq. (37) further to log transform:

$$\log |G_f(\omega)| = \log |R_f(\omega)| + \log |S_f(\omega)| \quad (38)$$

A cepstrum shown in Eq. (39) is obtained through the inverse Fourier transform.

$$G_c(q) = R_c(q) + S_c(q) \quad (39)$$

As shown in Eq. (39), the product in a spectrum domain becomes a sum in a cepstrum domain. The cepstrum $S_c(q)$ of the periodic line spectrum which is the sound source spectrum appears only near $T_p$, the sound source period. On the other hand, the vocal tract spectrum $R_f(\omega)$ is expressed as an envelope of $G_f(\omega)$, and its cepstrum $R_c(q)$ appears at a low frequency region. Namely, through the cepstral analysis, the vocal tract characteristic can be separated from the sound source characteristic.

The cepstral analysis is useful for data compression, however, a multiplier for Fourier transform has been required. On the other hand, Walsh transform does not require a multiplier, however, there remains a problem that approximation deteriorates as mentioned hereinabove.

Now, therefore, the invention employs the multiple Walsh transform (MWT) apparatus as mentioned instead of the Fourier transform and the inverse Fourier transform apparatuses. This embodiment of the present invention further provides a frequency extraction unit and a scale transform unit. The frequency extraction unit extracts a frequency component in a transmission band only from the sound spectrum and shifts the extracted frequency to zero frequency to remove an influence of characteristics outside the transmission band. The scale transform unit scale-transforms a frequency axis according to a mapping function to compress higher frequency information by the log scale transform and Mel scale transform, for example, thereby obtaining a transformed cepstrum having a characteristic close to the human aural characteristic.

An example of the configuration of this embodiment is shown in Fig. 17. For operation, an input time series data is inputted to a first buffer memory 110 and stored temporarily therein. A first orthogonal multiple Walsh transform (MWT) unit III performs the above-mentioned multiple Walsh transform according to this invention by using data read out of the first buffer memory 110 under control signals (same signals as the signal used in each embodiment described above acceptable) from a first control unit 112, and a Walsh spectrum $WM_i$ obtained finally is stored in the first buffer memory 110.

A log power multiple Walsh spectrum is obtained from the Walsh spectrum $WM_i$ through a power spectrum measuring unit 113 and a log transform unit 114. Then a scale transform unit 115 carries out a scale transform according to a mapping function $Sm = M(S_l)$. The scale transform is an operation for rearranging the data in the transmission band to a Mel scale according to the mapping function $Sm = M(S_l)$ as shown in Fig. 18, namely transforming $S_l$-th spectrum to Sm-th spectrum. More specifically, a scale transform control unit 1151 generates control signals $Cl_2$, $a_1$ according to a time chart shown in Fig. 19. The real part $WM_{Ri}$ and the imaginary part $WM_{Ii}$ of the multiple Walsh spectrum $WM_i$ are read out sequentially of the first buffer memory 110 in response to the signal $a_1$, and squared by a multiplier 1131 in the power spectrum measuring unit 113. A power multiple Walsh spectrum $P_i = WM^2_{Ri} + WM^2_{Ii}$) is obtained by means of an adder 1132 and an accumulator 1133, which is then subjected to log transform in the log transform unit 114. A log power multiple Walsh spectrum (log Pi) is stored at an M(i) address in the second buffer memory 116, M(i) being read out of a mapping function table memory unit 1152 in response to a signal $a_1$ as an address signal $a_2$ of a second buffer memory 116. A multiple Walsh transform in a second orthogonal transform unit 117 is operated similarly to the transform of the first orthogonal transform division 111, which is executed by using data from the second buffer memory 116 under the control of a second control unit 118. A timing relation of the signals $Cl_2$, $a_1$, $a_2$ is shown in Fig. 19.

A low-order term only of cepstrum is used normally for speech recognition. Therfore, the second-multiple Walsh transform calculates only on the low-order term (for less k) of a transform matrix of the multiple Walsh transform equation:

$$W_k = \sum_{\ell=0}^{N=1} H_{k\ell} \cdot X \tag{40}$$

Since $X_l$ is an even function, $H'_{kl}$ which is a real part of $H_{kl}$ can be used.

$$W_k = \sum_{\ell=0}^{N=1} H'_{k\ell} \cdot X_\ell \tag{41}$$

Next embodiment for obtaining cepstrum information refers to an apparatus based on the Walsh transform according to Eq. (41). A configuration of a second multiple Walsh transform unit according to this embodiment is shown in Fig. 20. A second control unit 118′ generates control signals $Cl_3$, $b_1$, $b_2$ according to a time chart shown in Fig. 21. The signal $Cl_3$ clears an accumulator 1172. A transformed log power multiple Walsh spectrum $X_l = \log P_{M(i)}$ is read out of the second buffer memory 116 according to a signal $b_1$. An operator 1171 carries out addition or subtraction according to a signal $b_2$ of +1 or −1 conforming to a real part $H'_{kj}$ of the multiple Walsh transform matrix. An accumulator 1172 accumulates the output of the operator 1171. That is, $ACC+X_j \rightarrow ACC$ is carried out when the signal $b_2$ indicates +1, and $ACC-X_j \rightarrow ACC$ is carried out when the signal $b_2$ indicates −1. When signal $b_1$ becomes N−1, a Walsh transform value $W_k$ or pseudo cepstrum is obtainable from the accumulator 1172.

It is then apparent that the above-mentioned transforming means shown in Figs. 4 and 10 can be used otherwise as the first and second orthogonal transform (multiple Walsh transform) units 111 and 117. Further in the embodiments of this invention, the input time series is arranged in an inverse binary order as an algorithm of FWT and so obtained through calculating the product in sequence from $P_1$ to $P_n$, however, it is apparent that a method for obtaining a Walsh spectrum W′ in an inverse binary order can also be employed consequently through calculating the product in sequence from $P^T_n$ to $P^T_1$ for time series X′ in normal order as shown in Eq. (42)

$$W' = G^T_1 \cdot G^T_2 \cdot \ldots G^T_n \cdot X' \tag{42}$$

Then, the power spectrum is obtained as $P_i = W^2_{wl} + W^2_{wl+1}$, however, it is also apparent that a method for obtaining the power spectrum approximately as the sum of absolute values like $P_l = |W_{2l}| + |W_{2l+1}|$ can be employed, as a multiplier is required in this case.

**Claims**

1. An orthogonal transformer which comprises a buffer memory (10) for storing an input time series data temporarily, an orthogonal transform means (20) for carrying out an orthogonal transform operation by multiplying data read sequentially out of said buffer memory by a predetermined twiddle factor each, and a control means (30) for specifying the data read out of said buffer memory, characterized in that said predetermined twiddle factor is a complex number on the unit square around the zero point, whose magnitude of the real or imaginary part is 1 or $r/2^l$, l being natural number including 0, and r being natural number including 0 determined for each l and $r \leqq 2^l$, and said control means gives the twiddle factor which is selected among predetermined twiddle factors as the nearest value to the trigonometric value on the unit circle used in a discrete Fourier transform.

2. The orthogonal transformer according to Claim 1, wherein said orthogonal transforming means comprises butterfly circuits which have registers (201, 202, 203, 204) for storing a real component and an imaginary component of first and second data read out of said buffer memory (10); a switch (211) for selecting predetermined signals from among a real component signal, an imaginary component signal of said second data and a zero signal and for supplying as two input signals of the following first and second operators; a first operator (221) operating for addition, subtraction or inversion of two output signals of said switch in response to a control signal; a second operator (222) operating for addition or subtraction of the two output signals of said switch; and adder/subtractor (231, 232, 233, 234) for carrying out addition or subtraction between outputs of said first and second operators and said first data; and a control means (30) for specifying data read out of said buffer memory as the same fashion as the fast Fourier transform and for controlling functions of said switch and said first operator to have a function of multiplying said second data by said twiddle factor which is selected among predetermined twiddle factors as the nearest value to the trigonometric value used in the fast Fourier transform.

3. The orthogonal transformer according to Claim 2, wherein said first operator (221) comprises an addition circuit (2210), a subtraction circuit (2211) and a circuit for addition and inversion (2212) which are connected in parallel to inputs, and a switch (2213) for outputting selectively one of outputs of said three circuits.

4. The orthogonal transformer according to Claim 2 or 3, wherein said second operator (222) comprises an addition circuit (2220) and a subtraction circuit (2221) which are connected in parallel to inputs, and a switch (2213) for outputting selectively one of outputs of said two circuits.

5. The orthogonal transformer according to any of Claims 2 to 4 further comprising a one-bit shift register (241, 242) provided between said switch (211) and said register (203, 204).

6. The orthogonal transformer according to Claim 1, wherein said orthogonal transform means (20) comprises a switch (213, 214) for selecting data signals read out of said buffer memory (10) and a zero signal, adder/subtractor (251, 252) taking an output of the switch as one input and an output of the accumulator as one input for performing addition or subtraction, an accumulator (261, 262) taking the output of said adder/subtractor for accumulating the output of said adder/subtractor; and a control means (30) for specifying data read out of said buffer memory in the same fashion as the discrete Fourier transform and for controlling functions of said switch and said first operator as a function of multiplying said second data by said twiddle factor which is selected among predetermined twiddle factors as the nearest value to the trigonometric value used in the discrete Fourier transform.

7. The orthogonal transformer according to Claim 6, further comprising a shifter (243) provided between said switch (214) and said buffer memory (10), input signals to said switch being an output signal from said buffer memory, an output signal of said shifter and a zero signal.

8. An apparatus which comprises a buffer memory (110) for storing an input time series data temporarily, a first orthogonal transform means (111) for carrying out an orthogonal transform operation by multiplying data read sequentially out of said buffer memory by a predetermined twiddle factor each, a control means (112) for specifying the data read out of said buffer memory, characterized in that said apparatus further includes a second orthogonal transform means (117) for subjecting the output of said first orthogonal transform means to a predetermined orthogonal transform, said predetermined twiddle factor is a complex number on the unit square around the zero point, whose magnitude of the real or imaginary part is l or $r/2^l$, l being natural number including 0, and r being natural number including 0 determined for each l and $r \leqq 2^l$, and said control means gives said twiddle factor which is selected among predetermined twiddle factors as the nearest value to the trigonometric value on the unit circle used in a discrete Fourier transform.

9. An apparatus according to Claim 8, further comprising a scale transforming means (115) for subjecting the output of said first orthogonal transform means (111) to a predetermined scale transformation, and for supplying the result to said second orthogonal transform means (117).

10. The apparatus according to Claim 8 or 9, wherein said second orthogonal transforming means (117) comprises a buffer memory (116) for storing an input time series data temporarily; the orthogonal transform means (117) for carrying out an orthogonal transform operation by multiplying data read sequentially out of said buffer memory (116) by a predetermined twiddle factor each, which is a complex number on the unit square around the zero point, whose magnitude of the real or imaginary part is 1 or $r/2^l$, l being natural number including 0, and $r \leqq 2^l$; a control means (118) for specifying the data read out of said buffer memory and for giving said twiddle factor which is selected among predetermined twiddle factors as the nearest value to the trigonometric value used in a discrete Fourier transform.

11. The apparatus according to Claim 8 or 10, wherein said second orthogonal transforming means is a means for obtaining only a predetermined low-order term.

12. The apparatus according to any of Claims 8 to 11, further comprising a means (113) for obtaining a power spectrum of the output of said first orthogonal transform output.

13. The apparatus according to any of Claims 8 to 12, wherein said scale transforming means (115) comprises at least one transforming means of a log transforming means and a Mel transforming means.

14. The orthogonal transformer according to any of Claims 1 to 4, 6 and 8 to 13 wherein said values of said twiddle factor are given as: 1, 1+j, j, −1+j, −1, −1−j, −j, 1−j.

15. The orthogonal transformer according to any of claims 1, 3 to 5 and 7 to 13 wherein said values of said twiddle factor are given as: 1, $1+\frac{1}{2}j$, 1+j, $\frac{1}{2}+j$, j, $-\frac{1}{2}+j$, −1+j, $-1+\frac{1}{2}j$, −1, $-1-\frac{1}{2}j$, −1−j, $-\frac{1}{2}-j$, −j, $\frac{1}{2}-j$, 1−j, $1-\frac{1}{2}j$.

## Patentansprüche

1. Orthogonal-Transformator mit einem Pufferspeicher (10) zum zeitweisen Speichern von zeitseriellen Eingabedaten, einer Orthogonal-Transformationseinrichtung (20) zum Ausführen einer orthogonal Transformation durch Multiplizieren von jeweils aus dem Pufferspeicher sequentiell ausgelesenen Daten mit einem bestimmten Drehfaktor, und mit einer Steuereinrichtung (30) zum Benennen der aus dem Pufferspeicher ausgelesenen Daten, dadurch gekennzeichnet, daß der bestimmte Drehfaktor eine komplexe Zahl auf dem Einheitsquadrat um den Nullpunkt ist, wobei dessen Größe des Real- oder Imaginärteils gleich 1 oder $r/2^l$ ist (1 ist eine natürliche Zahl einschließlich 0 und r ist eine natürliche Zahl einschließlich 0 bestimmt für jedes 1 und $r \leqq 2^l$), und daß die Steuereinrichtung den Drehfaktor angibt, der ausgewählt wird unter bestimmten Drehfaktoren als der nächstliegende Wert, zu dem bei der diskreten Fourier-Transformation verwendeten trigonometrischen Wert.

2. Orthogonal-Transformator nach Anspruch 1, wobei die Orthogonal-Transformationseinrichtung aufweist Schmeterlingskreise, die Register (201, 202, 203, 204) zum Speichern einer reellen Komponente und einer imaginären Komponente von aus dem Pufferspeicher (10) ausgelesenen ersten und zweiten Daten; einen Schalter (211) zum Auswählen von bestimmten Signalen aus einem reellen Komponentensignal, einem imaginären Komponentensignal der zweiten Daten und einem Nullsignal und zum Liefern dieser als zwei Eingabesignale des folgenden ersten und zweiten Operators; einem ersten Operator (221), der betrieben wird zum Addieren, Subtrahieren oder Invertieren von zwei Ausgabesignalen des Schalters in Abhängigkeit von einem Steuersignal; einem zweiten Operator (222), der Betrieben wird zum Addieren oder Subtrahieren der zwei Ausgabesignale des Schalters; und Addierer/Subtrahierer (231, 232, 233, 234) zum Ausführen von Additionen oder Subtraktionen von Ausgaben des ersten und zweiten Operators und von ersten Daten; und eine Steuereinrichtung (30) zum Benennen von aus dem Pufferspeicher ausgelesenen Daten in der gleichen Weise wie der schnellen Fourier-Transformation und zum Steuern von Funktionen des Schalters und des ersten Operators, so daß erreicht wird, daß die zweiten Daten mit dem Drehfaktor multipliziert werden, der unter den bestimmten Drehfaktoren als der nächstliegende Wert zu dem bei der schnellen Fourier-Transformation verwendeten trigonometrischen Wert.

3. Orthogonal-Transformator nach Anspruch 2, wobei der erste Operator (221) einen Additionsschaltkreis (2210), einen Subtraktionsschaltkreis (2211) und einen Schaltkreis zum Addieren und Invertieren (2212), die zu Eingaben parallel geschaltet sind, und einen Schalter (2213) aufweist zum wahlweisen Ausgeben einer der Ausgaben der drei Schaltkreise.

4. Orthogonal-Transformator nach Anspruch 2 oder 3, wobei der zweite Operator (222) einen Additionsschaltkreis (2220) und einen Subtraktionsschaltkreis (2221), die zu Eingaben parallel geschaltet sind, und einen Schalter (2213) aufweist zum wahlweisen Ausgeben einer der Ausgaben der beiden Schaltkreise.

5. Orthogonal-Transformator nach einem der Ansprüche 2 bis 4, ferner mit einem zwischen dem Schalter (211) und dem Register (203, 204) vorgesehenes ein-Bit-Schieberegister (241, 242).

6. Orthogonal-Transformator nach Anspruch 1, wobei die Orthogonal-Transformationseinrichtung (20) aufweist einen Schalter (213) zum Auswählen von aus dem Pufferspeicher (10) ausgewählten Datensignale und einem Null-Signale, Addierer/Subtrahierer (251, 252), die als eine Eingabe, eine Ausgabe des Schalters und als eine andere Eingabe eine Ausgabe eines Akkumulators empfangen zum Ausführen einer Addition oder Subtraktion, einen Akkumulator (261, 262), der die Ausgabe des Addierers/Subtrahierers empfängt zum Ansammeln der Ausgaben des Addierers/Substrahierers; und eine Steuereinrichtung (30) zum Benennen der aus dem Pufferspeicher ausgelesenen Daten in der gleichen Weise wie bei der diskreten Fourier-Transformation und Steuern von Funktionen des Schalters und des ersten Operators, so daß dieser die zweiten Daten mit dem Drehfaktor multipliziert, der unter den bestimmten Drehfaktoren ausgewählt ist als der nächstliegende Wert zu dem bei der diskreten Fourier-Transformation verwendeten trigonometrischen Wert.

7. Orthogonal-Transformator nach Anspruch 6, ferner mit einem zwischen dem Schalter (213) und dem Pufferspeicher (10) vorgesehenen Schieberegister, wobei die Eingabesignale des Schalters ein Ausgabesignal des Pufferspeichers, ein Ausgabesignal des Schieberegisters und ein Null-Signal sind.

8. Vorrichtung mit einem Pufferspeicher (110) zum zeitweisen Speichern von zeitseriellen Eingabedaten, einer ersten Orthogonal-Transformationseinrichtung (111) zum Ausführen einer orthogonalen Transformation durch Multiplizieren von jeweils aus dem Pufferspeicher sequentiell ausgelesenen Daten mit einem bestimmten Drehfaktor, einer Steuereinrichtung (112) zum Benennen der aus dem Pufferspeicher ausgelesenen Daten, dadurch gekennzeichnet, daß die Vorrichtung ferner eine zweite Orthogonal-Transformationseinrichtung (117) aufweist zum Ausführen einer bestimmten orthogonal Transformation mit der Ausgabe der ersten Orthogonal-Transformationseinrichtung, wobei der genannte Drehfaktor eine komplexe Zahl auf dem Einheitsquadrat um den Nullpunkt ist, wobei die Größe dessen Real- oder Imaginärteils 1 oder $r/2^l$ ist (l ist eine natürliche Zahl einschließlich 0 und r ist eine natürliche Zahl einschließlich 0, die für jedes l bestimmt wird, und $r \leqq 2^l$ ist) und daß die Steuereinrichtung den Drehfaktor angibt, der ausgewählt wird unter bestimmten Drehfaktoren als der nächstliegende Wert zu dem bei der diskreten Fourier-Transformation verwendeten trigonometrischen Wert.

9. Vorrichtung nach Anspruch 8, ferner mit einer Skalierungstransformationseinrichtung (115) zum Durchführen einer bestimmten Maßstabstransformation mit der Ausgabe der ersten Orthogonal-Transformationseinrichtung (111) und zum Liefern des Ergebnisses an die zweite Orthogonal-Transformationseinrichtung (117).

10. Vorrichtung nach Anspruch 8 oder 9, wobei die zweite Orthogonal-Transformationseinrichtung (117) einen Pufferspeicher (116) aufweist zum zeitweisen Speichern von zeitseriellen Eingabedaten; die Orthogonal-Transformationseinrichtung (117) dazu dient, eine orthogonale Transformation durchzuführen durch Multiplizieren von jeweils aus dem Pufferspeicher (110) sequentiell ausgelesenen Daten mit einem bestimmten Drehfaktor, der eine komplexe Zahl auf dem Einheitsquadrat um den Nullpunkt ist, wobei die Größe dessen Real- oder Imaginärteils 1 oder $r/2^l$ ist (l ist eine natürliche Zahl einschließlich 0 und $r \leqq 2^l$), eine Steuereinrichtung (118) zum Benennen der aus dem Pufferspeicher ausgelesenen Daten und zum Angeben des Drehfaktors, der ausgewählt wird unter bestimmten Drehfaktoren als der nächstliegende Wert zu dem bei der diskreten Fourier-Transformation verwendeten trigonometrischen Wert.

11. Vorrichtung nach Anspruch 8 oder 10, wobei die zweite Orthogonal-Transformationseinrichtung eine Einrichtung ist, die nur einen bestimmten niedrigwertigen Term enthält.

12. Vorrichtung nach einem der Ansprüche 8 bis 11, ferner mit einer Einrichtung (113) zum Erhalten eines Leistungsspektrums der Ausgabe der ersten Orthogonal-Transformationsausgabe.

13. Vorrichtung nach einem der Ansprüche 8 bis 12, wobei die Skalierungstransformationseinrichtung (115) mindestens eine der folgenden Transformationseinrichtung aufweist, eine log-Transformationseinrichtung und eine Mel-Transformationseinrichtung.

14. Orthogonal-Transformator nach einem Ansprüche 1 bis 4, 6 und 8 bis 13, wobei die Werte der Drehfaktoren gegeben sind als 1, 1+j, j, −1+j, −1, −1−j, −j, 1−j.

15. Orthogonal-Transformator nach einem der Ansprüche 1, 3 bis 5 und 7 bis 13, wobei die Werte der Drehfaktoren gegeben sind als: 1, $1+\frac{1}{2}j$, 1+j, $\frac{1}{2}+j$, j, $-\frac{1}{2}+j$, −1+j, $-1+\frac{1}{2}j$, −1, $-1-\frac{1}{2}j$, −1−j, $-\frac{1}{2}-j$, −j, $\frac{1}{2}-j$, 1−j, $1-\frac{1}{2}j$.

**Revendications**

1. Transformateur orthogonal qui comprend une mémoire tampon (10) pour mémoriser temporairement une donnée en série dans le temps en entrée, un moyen de transformation orthogonale (20) pour effectuer une opération de transformation orthogonale en multipliant les données extraites séquentiellement de la mémoire tampon par un facteur d'adaptation prédéterminé pour chacune, et un moyen de commande (30) pour spécifier les données extraites de la mémoire tampon, caractérisé en ce que le facteur d'adaptation prédéterminé est un nombre complexe sur le carré unité autour du point zéro, dont l'amplitude de la partie réelle ou imaginaire est 1 ou $r/2^l$, l étant un nombre naturel comprenant 0, et r étant un nombre naturel incluant 0 déterminé pour chaque l et $r \leqq 2^l$, et le moyen de commande fournit le facteur d'adaptation qui est sélectionné parmi les facteurs d'adaptation prédéterminés comme la valeur la plus proche de la valeur trigonométrique sur le cercle unité utilisée dans une transformation de Fourier discrète.

2. Transformateur orthogonal selon la revendication 1, dans lequel le moyen de transformation orthogonale comprend des circuits de type papillon qui comportent des registres (201, 202, 203, 204) pour mémoriser une composante réelle et une composante imaginaire d'une première et seconde données extraites de ladite mémoire tampon (10), un commutateur (211) pour sélectionner des signaux prédéterminés parmi un signal de composante réelle, un signal de composante imaginaire de la seconde donnée et un signal zéro pour fournir sous la forme de deux signaux en entrée des premier et second opérateurs; un premier opérateur (221) fonctionnant pour l'addition, la soustraction ou l'inversion de deux signaux en entrée du commutateur en réponse à un signal de commande; un second opérateur (222) fonctionnant pour l'addition ou la soustraction de deux signaux en sortie du commutateur; et un additionneur/soustracteur (231, 232, 233, 234) pour effectuer une addition ou une soustraction entre des sorties des premier et second opérateurs et de la première donnée; un moyen de commande (30) pour spécifier des données extraites de la mémoire tampon de la même manière que la transformation rapide de Fourier et pour commander des fonctions du commutateur et du premier opérateur afin d'avoir une fonction de multiplication de la seconde donnée par le facteur d'adaptation qui est sélectionne parmi des facteurs d'adaptation prédéterminés comme la valeur la plus proche de la valeur trigonométrique utilisée dans la transformation rapide de Fourier.

3. Transformateur orthogonal selon la revendication 2, dans lequel le premier opérateur (221) comprend un circuit d'addition (2210), un circuit de soustraction (2211), et un circuit pour addition et inversion (2212) qui sont connectés en parallèle aux entrees, et un commutateur (2213) pour sortir sélectivement l'une des sorties des trois circuits.

4. Transformateur orthogonal selon la revendication 2 ou 3, dans lequel le second opérateur (222) comprend un circuit d'addition (2220) et un circuit de soustraction (2221) qui sont connectés en parallèle aux entrées, et un commutateur (2213) pour sortir sélectivement une des sorties des deux circuits.

5. Transformateur orthogonal selon l'une quelconque des revendications 2 à 4 comprenant en outre un registre à décalage de un bit (241, 242) prévu entre le commutateur (211) et le registre (203, 204).

6. Transformateur orthogonal selon la revendication 1, dans lequel le moyen de transformation orthogonale (20) comprend un commutateur (213) pour sélectionner des signaux de données extraits de la mémoire tampon (10) et un signal zéro, un additionneur/soustracteur (251, 252) prenant une sortie du commutateur comme une entrée et une sortie de l'accumulateur comme une entrée pour effectuer une addition ou une soustraction, un accumulateur (261, 262) prenant la sortie de l'additionneur/soustracteur pour accumuler la sortie de l'additionneur/soustracteur, et un moyen de commande (30) pour spécifier des données extraites de la mémoire tampon de la même manière que la transformation discrète de Fourier et pour commander des fonctions du commutateur et du premier opérateur comme une fonction de multiplication de la seconde donnée par le facteur d'adaptation qui est sélectionné parmi des facteurs d'adaptation prédéterminées comme la valeur la plus proche de la valeur trigonométrique utilisée dans la transformation discrète de Fourier.

7. Transformateur orthogonal selon la revendication 6, comprenant en outre un dispositif à décalage (243) prévu entre le commutateur (213) et la mémoire tampon (10), les signaux d'entrée vers le commutateur étant un signal de sortie provenant de la mémoire tampon, un signal de sortie du dispositif à décalage et un signal zéro.

8. Appareil qui comprend une mémoire tampon (110) pour mémoriser temporairement une donnée en série dans le temps en entrée, un premier moyen de transformation orthogonale (111) pour effectuer une opération de transformation orthogonale en multipliant des données extraites séquentiellement de la mémoire tampon par un facteur d'adaptation prédéterminé pur chacune, un moyen de commande (112) pour spécifier les données extraites de ladite mémoire tampon, caractérisé en ce que l'appareil comprend en outre un second moyen de transformation orthogonale (117) pour soumettre la sortie du premier moyen de transformation orthogonale à une transformation orthogonale prédéterminée, le facteur d'adaptation prédéterminé est un nombre complexe sur le carré unité autour du point zéro, dont l'amplitude de la partie réelle ou imaginaire est I ou $r/2^l$, I étant un nombre naturel incluant zéro, et r étant un nombre naturel incluant zéro déterminé pour chaque I et $r \leqq 2^l$, et le moyen de commande fournit le facteur d'adaptation qui est sélectionné parmi des facteurs d'adaptation prédéterminés comme la valeur la plus proche de la valeur trigonométrique sur le cercle unité dans une transformation discrète de Fourier.

9. Appareil selon la revendication 8, comprenant en outre un moyen de transformation d'échelle (115) pour soumettre la sortie du premier moyen de transformation orthogonale (111) à une transformation d'échelle prédéterminée et pour envoyer le résultat au second moyen de transformation orthogonale (117).

10. Appareil selon la revendication 8 ou 9, dans lequel le second moyen de transformation orthogonale (117) comprend une mémoire tampon (116) pour mémoriser temporairement une donnée en série dans le temps en entrée; le moyen de transformation orthogonale (117) pour effectuer une opération de transformation orthogonale en multipliant des données extraites séquentiellement de la mémoire tampon (10) par un facteur d'adaptation prédéterminé pour chacune, qui est un nombre complexe sur le carré unité autour d'un point zéro, dont l'amplitude de la partie réelle ou imaginaire est 1 ou $r/2^l$, I étant un nombre naturel incluant 0, et $r \leqq 2^l$; un moyen de commande (118) pour spécifier les données extraites de la mémoire tampon et pour fournir le facteur d'adaptation qui est sélectionné parmi des facteurs d'adaptation prédéterminés comme la valeur la plus proche de la valeur trigonométrique utilisée dans la transformation discrète de Fourier.

11. Appareil selon la revendication 8 ou 10, dans lequel le second moyen de transformation orthogonale est un moyen pour obtenir seulement un terme de bras ordre prédéterminé.

12. Appareil selon l'une quelconque des revendications 8 à 11, comprenant en outre un moyen (113) pour obtenir un spectre de puissance de la sortie de la première sortie de transformation orthogonale.

13. Appareil selon l'une quelconque des revendications 8 à 12, dans lequel le moyen de transformation d'échelle (115) comprend au moins un moyen de transformation d'une moyen de transformation logarithmique et d'un moyen de transformation de Mel.

14. Transformateur orthogonal selon l'une quelconque des revendications 1 à 4, 6 et 8 à 13 dans lequel les valeurs du facteur d'adaptation sont données comme: $1, 1+j, j, -1+j, -1, -1-j, -j, 1-j$.

15. Transformateur orthogonal selon l'une quelconque des revendications 1 et 3 à 5 et 7 à 13 dans lequel les valeurs du facteur d'adaptation sont données comme: $1, 1+\frac{1}{2}j, 1+j, \frac{1}{2}+j, j, -\frac{1}{2}+j, -1+j, -1+\frac{1}{2}j, -1, -1-\frac{1}{2}j, -1-j, -\frac{1}{2}-j, -j, \frac{1}{2}-j, 1-j, 1-\frac{1}{2}j$.

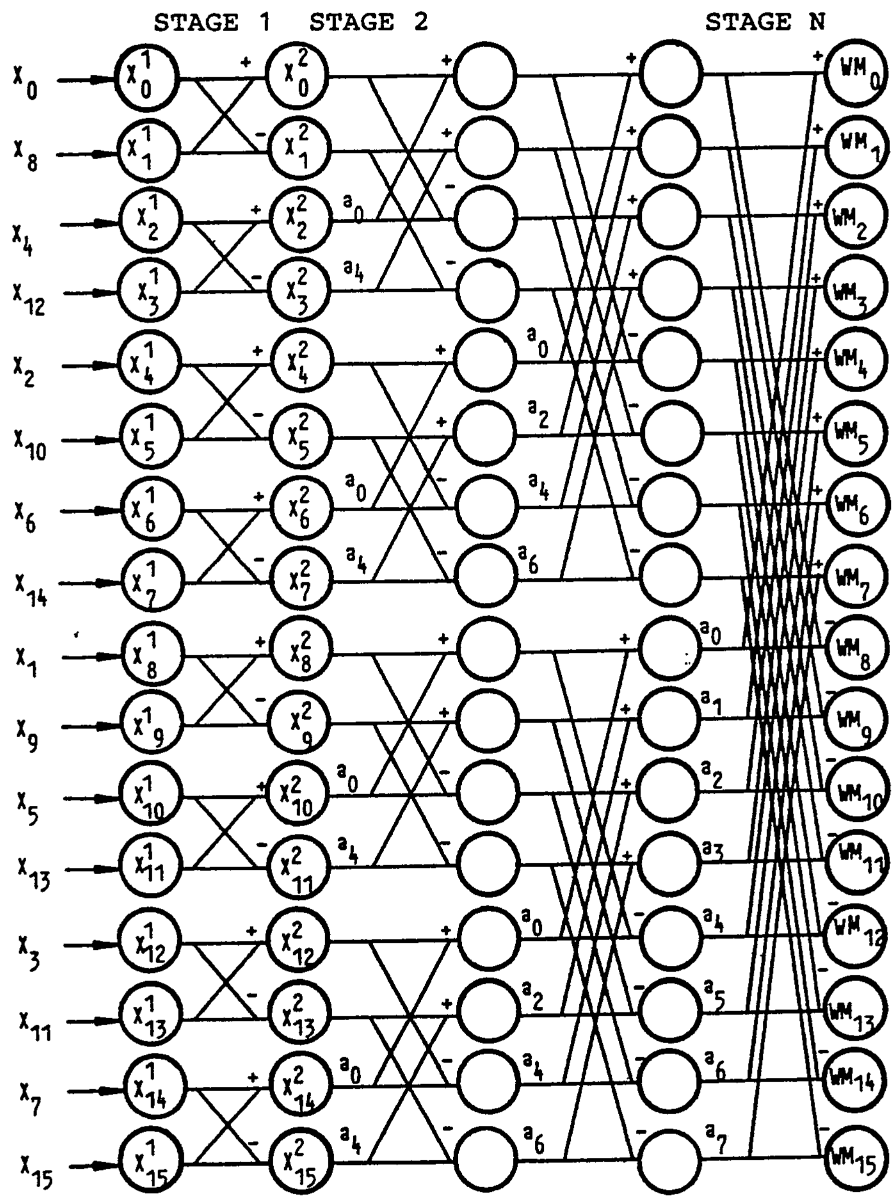
STAGE 1
STAGE 2
STAGE N
$X_0$
$X_8$
$X_4$
$X_{12}$
$X_2$
$X_{10}$
$X_6$
$X_{14}$
$X_1$
$X_9$
$X_5$
$X_{13}$
$X_3$
$X_{11}$
$X_7$
$X_{15}$
$a_0$
$a_1$
$a_2$
$a_3$
$a_4$
$a_5$
$a_6$
$a_7$
$WM_0$
$WM_1$
$WM_2$
$WM_3$
$WM_4$
$WM_5$
$WM_6$
$WM_7$
$WM_8$
$WM_9$
$WM_{10}$
$WM_{11}$
$WM_{12}$
$WM_{13}$
$WM_{14}$
$WM_{15}$

Fig. 1

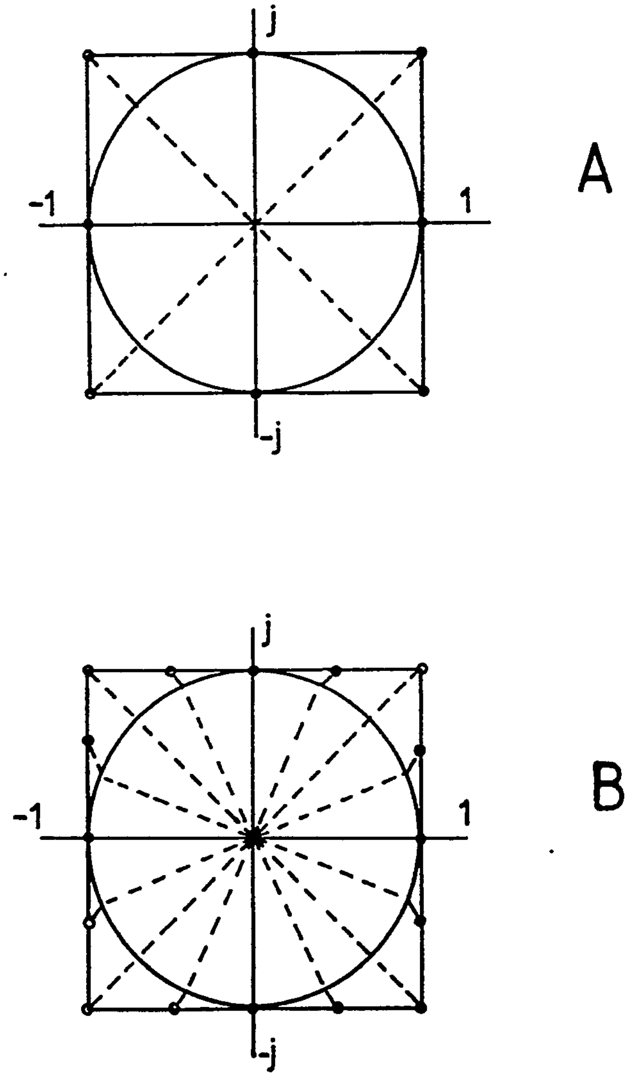


Fig. 2

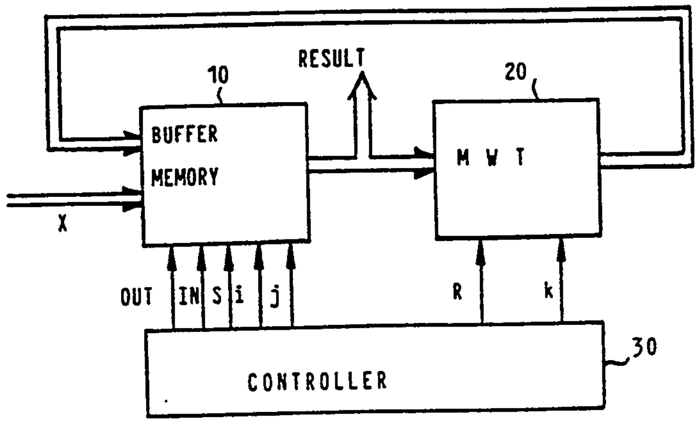
RESULT
10
20
BUFFER
MEMORY
M W T
X
OUT
IN
S
i
j
R
k
CONTROLLER
30

Fig. 3

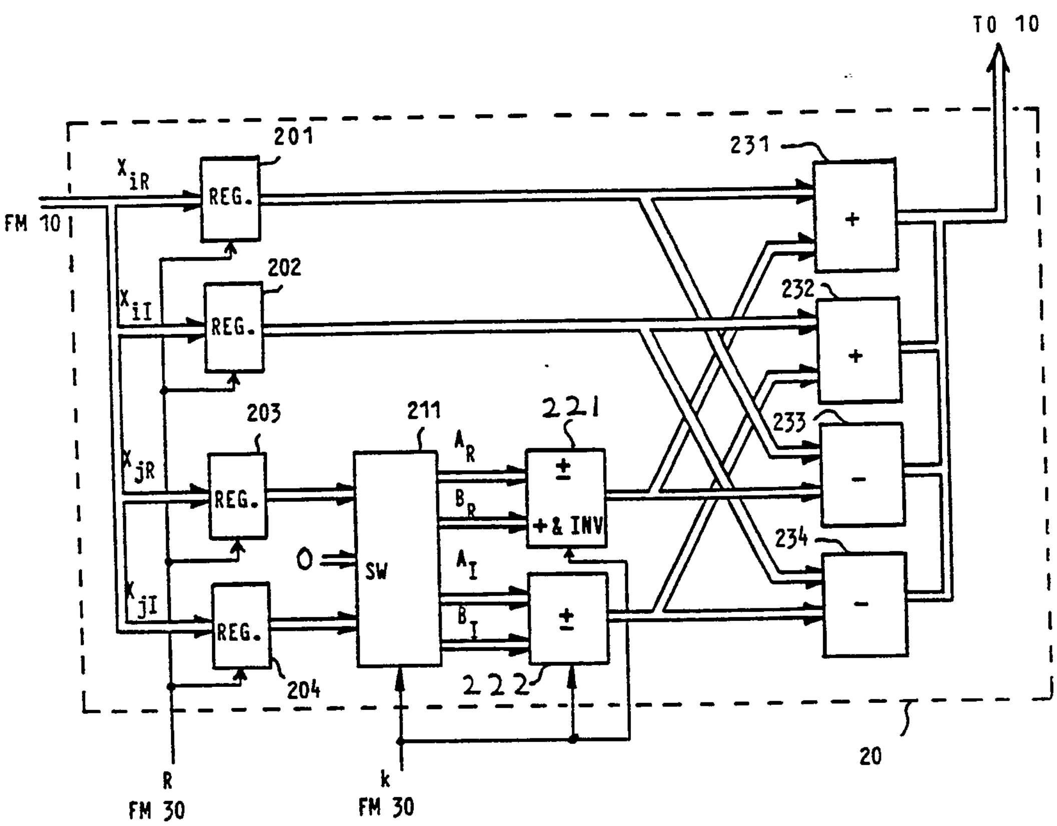
TO 10
FM 10
201
202
203
204
211
221
222
231
232
233
234
REG.
REG.
REG.
REG.
SW
0
+
+
-
-
±
+& INV
±
20
R
FM 30
k
FM 30

Fig. 4

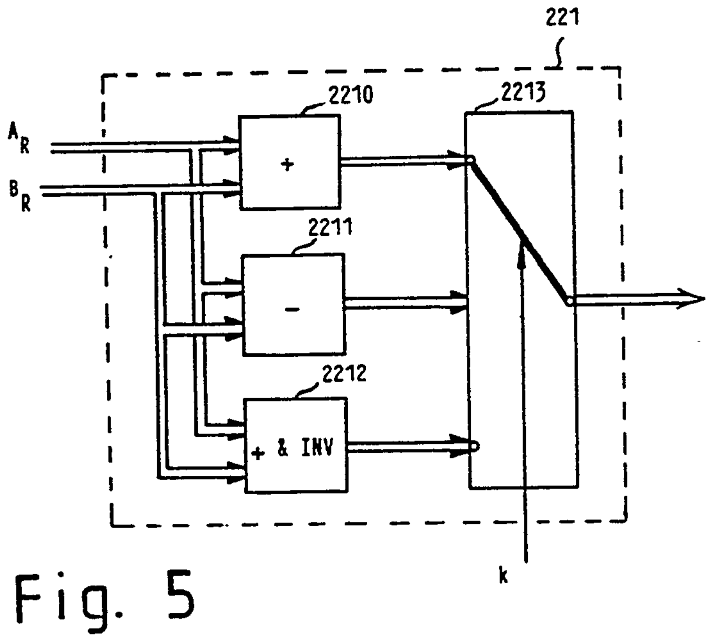


Fig. 5

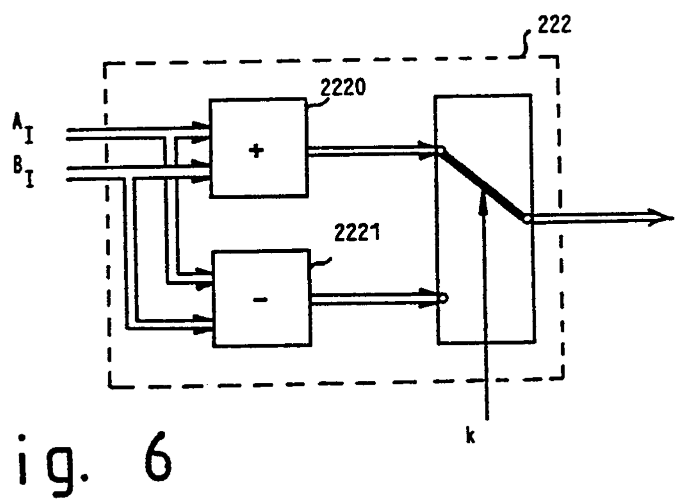


Fig. 6

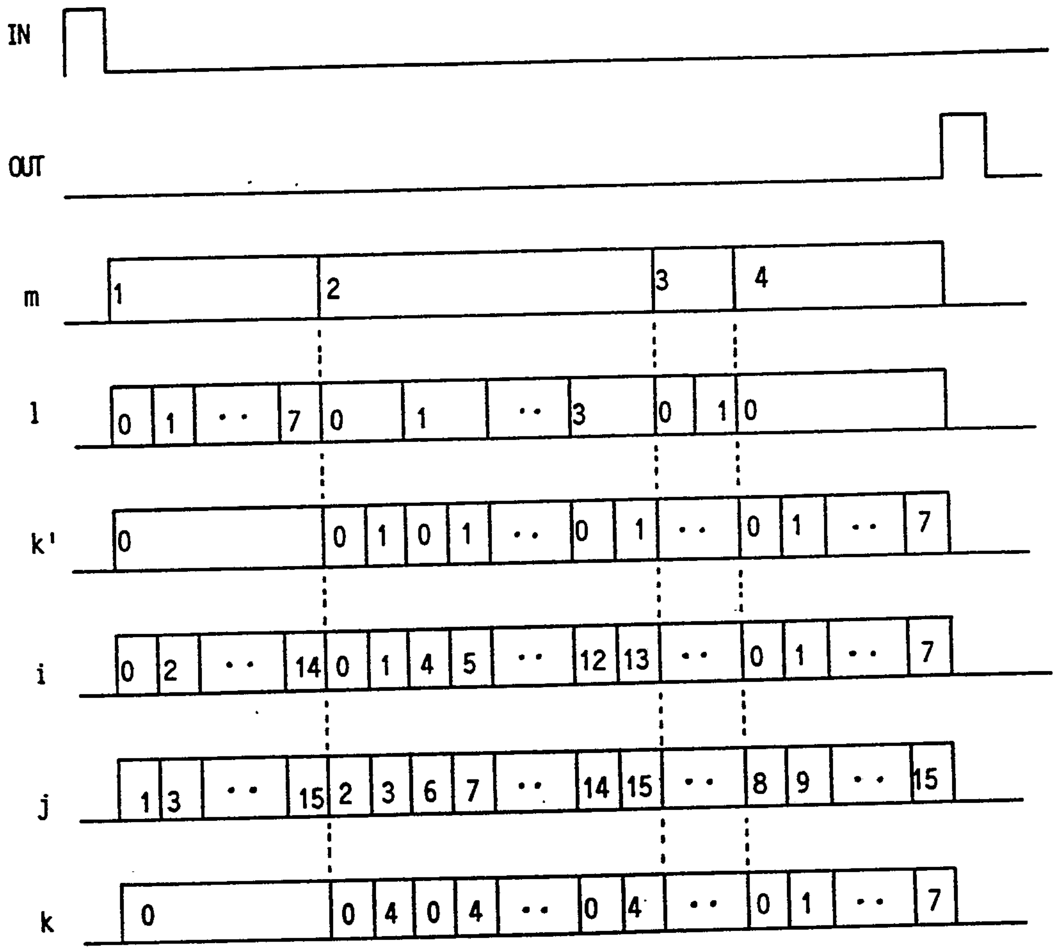
IN
OUT
m
1
2
3
4
l
0
1
..
7
0
1
..
3
0
1
0
k'
0
0
1
0
1
..
0
1
..
0
1
..
7
i
0
2
..
14
0
1
4
5
..
12
13
..
0
1
..
7
j
1
3
..
15
2
3
6
7
..
14
15
..
8
9
..
15
k
0
0
4
0
4
..
0
4
..
0
1
..
7

Fig. 7

| k | INPUT of 221 | | INPUT of 222 | | FUNCTION OF 221 | FUNCTION OF 222 |
|---|---|---|---|---|---|---|
| | $A_R$ | $B_R$ | $A_I$ | $B_I$ | | |
| 0 | $X_{jR}$ | 0 | $X_{jI}$ | 0 | + | + |
| 1 | $X_{jR}$ | 0 | $X_{jI}$ | 0 | + | + |
| 2 | $X_{jR}$ | $X_{jI}$ | $X_{jR}$ | $X_{jI}$ | - | + |
| 3 | $X_{jR}$ | $X_{jI}$ | $X_{jR}$ | $X_{jI}$ | - | + |
| 4 | 0 | $X_{jI}$ | $X_{jR}$ | 0 | - | + |
| 5 | 0 | $X_{jI}$ | $X_{jR}$ | 0 | - | + |
| 6 | $X_{jR}$ | $X_{jI}$ | $X_{jR}$ | $X_{jI}$ | + & INV. | - |
| 7 | $X_{jR}$ | $X_{jI}$ | $X_{jR}$ | XjI | + & INV. | - |

Fig. 8

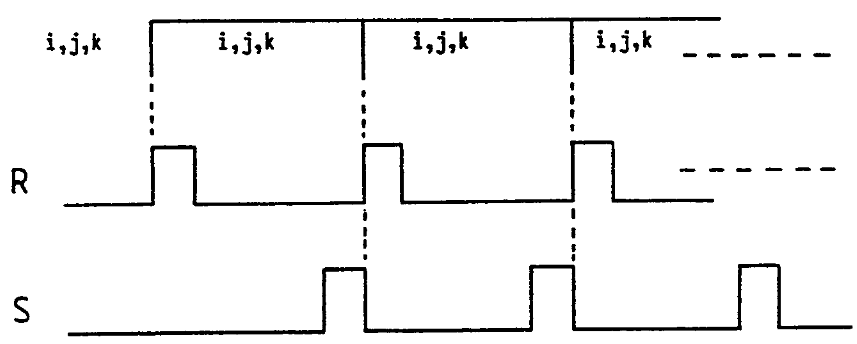


Fig. 9

Fig. 10

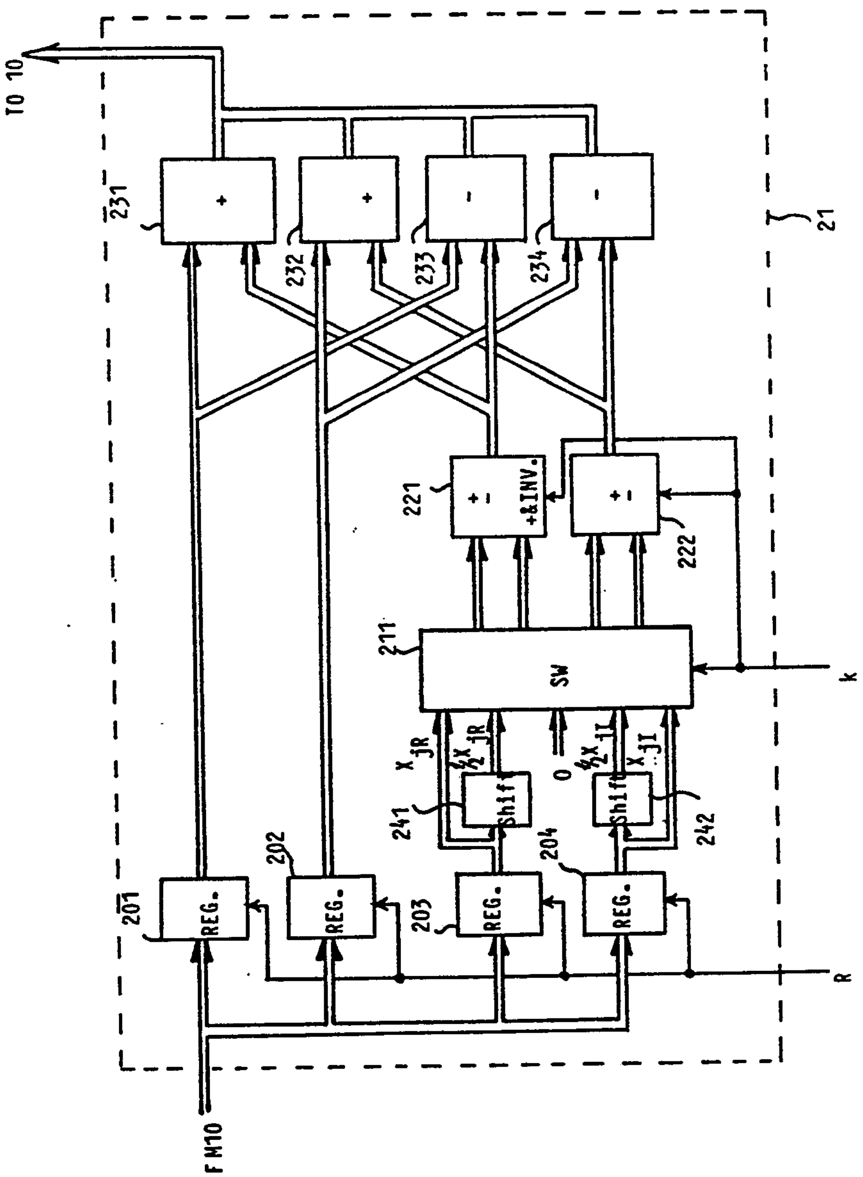
TO 10
231
232
233
234
21
221
222
+&INV.
211
SW
k
FM 30
R
FM 30
201
202
203
204
REG.
REG.
REG.
REG.
241
242
Shift
Shift
FM10
0

| k | INPUT of 221 | | INPUT of 222 | | FUNCTION of 221 | FUNCTION of 222 |
|---|---|---|---|---|---|---|
| | $A_R$ | $B_R$ | $A_I$ | $B_I$ | | |
| 0 | $X_{jR}$ | 0 | $X_{jI}$ | 0 | + | + |
| 1 | $X_{jR}$ | $\frac{1}{2}X_{jI}$ | $\frac{1}{2}X_{jR}$ | $X_{jI}$ | - | + |
| 2 | $X_{jR}$ | $X_{jI}$ | $X_{jR}$ | $X_{jI}$ | - | + |
| 3 | $\frac{1}{2}X_{jR}$ | $X_{jI}$ | $X_{jR}$ | $\frac{1}{2}X_{jI}$ | - | + |
| 4 | 0 | $X_{jI}$ | $X_{jR}$ | 0 | - | + |
| 5 | $\frac{1}{2}X_{jR}$ | $X_{jI}$ | $X_{jR}$ | $\frac{1}{2}X_{jI}$ | + & INV. | - |
| 6 | $X_{jR}$ | $X_{jI}$ | $X_{jR}$ | $X_{jI}$ | + & INV. | - |
| 7 | $X_{jR}$ | $\frac{1}{2}X_{jI}$ | $\frac{1}{2}X_{jR}$ | $X_{jI}$ | + & INV. | - |

Fig. 11

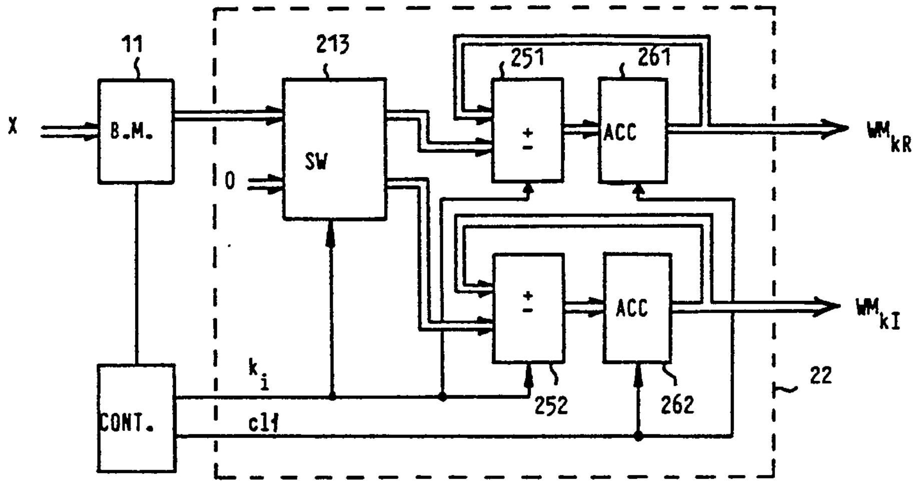
11
213
251
261
X
B.M.
SW
0
±
ACC
WMkR
±
ACC
WMkI
ki
clf
CONT.
252
262
22

Fig. 12

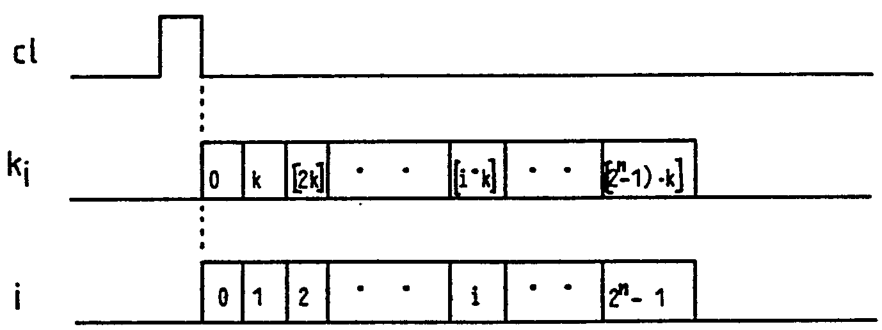
cl
ki
0
k
[2k]
[i·k]
[(2n-1)·k]
i
0
1
2
i
2n- 1

Fig. 13

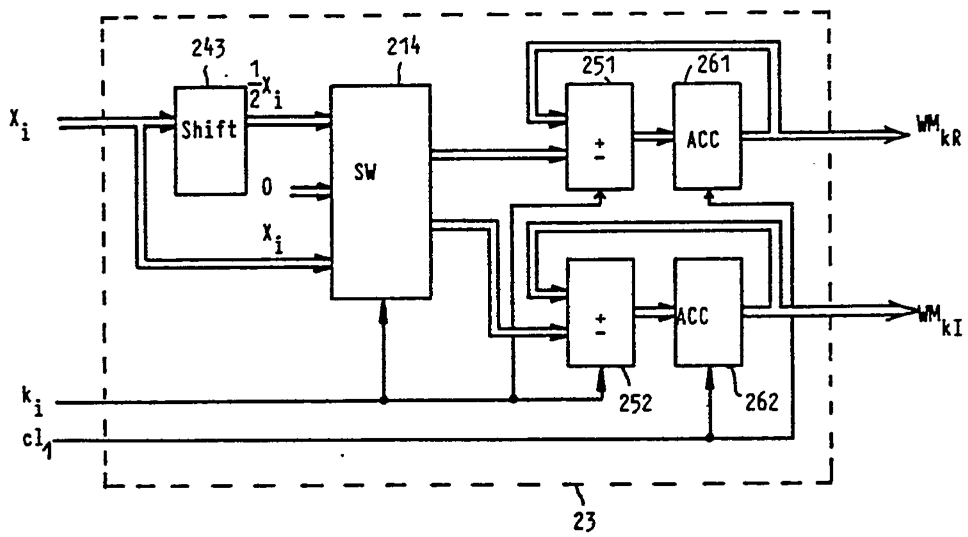
243
214
251
261
Shift
SW
ACC
ACC
0
±
±
$X_i$
$\frac{1}{2}X_i$
$X_i$
$k_i$
$cl_1$
$WM_{kR}$
$WM_{kI}$
252
262
23

Fig. 15

| [k·i] | 251 INPUT | 252 INPUT | 251 FUNCTION | 252 FUNCTION |
|---|---|---|---|---|
| 0 | $X_i$ | 0 | + | + |
| 1 | $X_i$ | $X_i$ | + | + |
| 2 | 0 | $X_i$ | + | + |
| 3 | $X_i$ | $X_i$ | - | + |
| 4 | $X_i$ | 0 | - | + |
| 5 | $X_i$ | $X_i$ | - | - |
| 6 | 0 | $X_i$ | + | - |
| 7 | $X_i$ | $X_i$ | + | - |

Fig. 14

| [k·i] | 251 INPUT | 252 INPUT | 251 FUNCTION | 252 FUNCTION |
|---|---|---|---|---|
| 0 | $X_i$ | 0 | + | + |
| 1 | $X_i$ | $\frac{1}{2} X_i$ | + | + |
| 2 | $X_i$ | $X_i$ | + | + |
| 3 | $\frac{1}{2} X_i$ | $X_i$ | + | + |
| 4 | 0 | $X_i$ | + | + |
| 5 | $\frac{1}{2} X_i$ | $X_i$ | - | + |
| 6 | $X_i$ | $X_i$ | - | + |
| 7 | $X_i$ | $\frac{1}{2} X_i$ | - | + |
| 8 | $X_i$ | 0 | - | + |
| 9 | $X_i$ | $\frac{1}{2} X_i$ | - | - |
| 10 | $X_i$ | $X_i$ | - | - |
| 11 | $\frac{1}{2} X_i$ | $X_i$ | - | - |
| 12 | 0 | $X_i$ | + | - |
| 13 | $\frac{1}{2} X_i$ | $X_i$ | + | - |
| 14 | $X_i$ | $X_i$ | + | - |
| 15 | $X_i$ | $\frac{1}{2} X_i$ | + | - |

Fig. 16

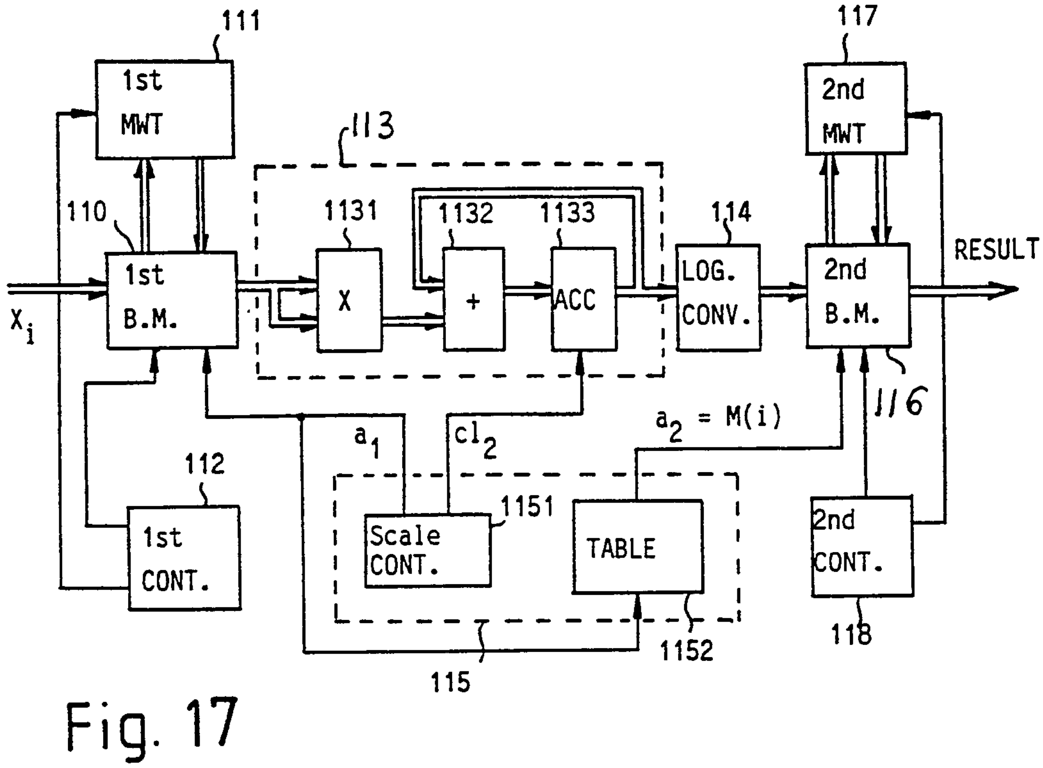
111
1st
MWT
113
110
1131
1132
1133
114
117
2nd
MWT
1st
B.M.
X
+
ACC
LOG.
CONV.
2nd
B.M.
RESULT
Xi
116
a1
cl2
a2 = M(i)
112
1st
CONT.
Scale
CONT.
1151
TABLE
1152
115
2nd
CONT.
118

Fig. 17

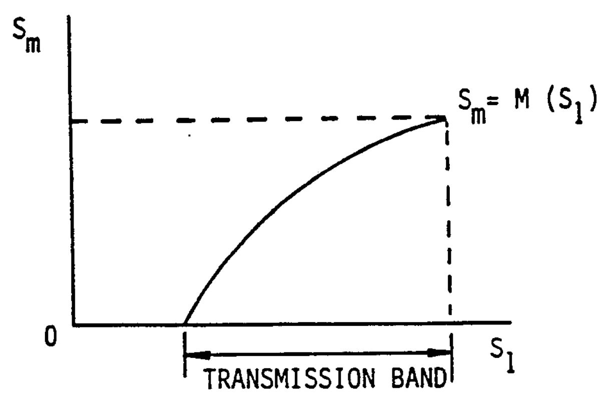
Sm
Sm= M (S1)
0
S1
TRANSMISSION BAND

Fig. 18

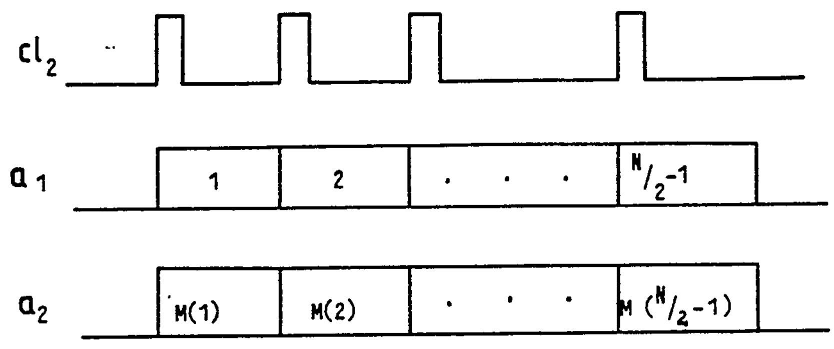


Fig. 19

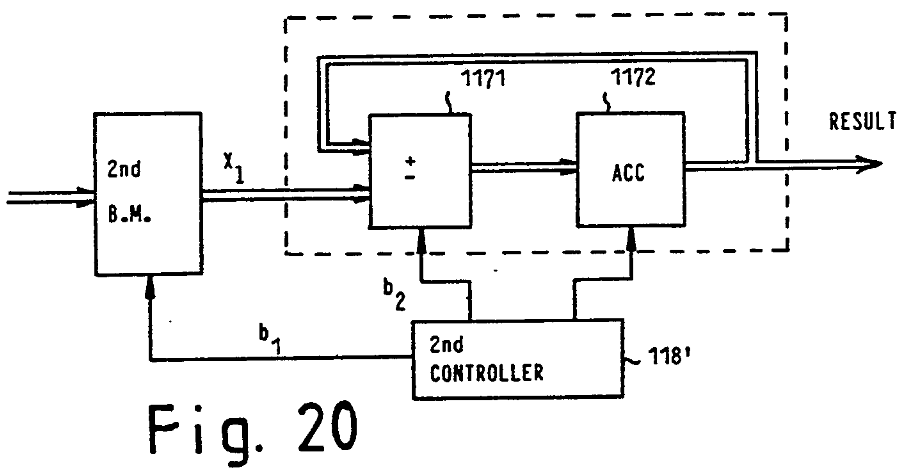


Fig. 20

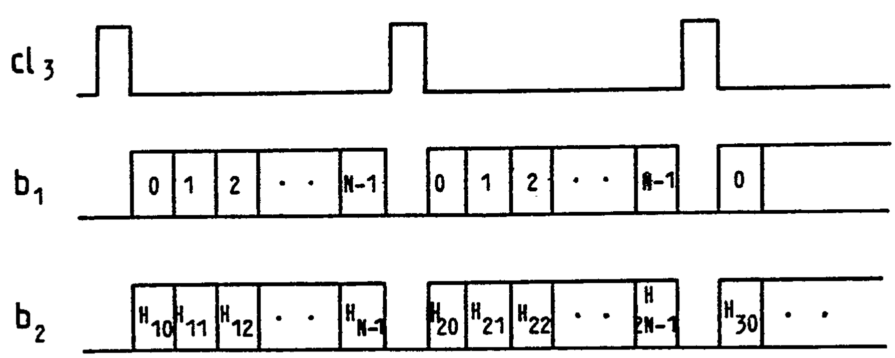


Fig. 21